(19) Europäisches Patentamt
European Patent Office
Office européen des brevets

(11) **EP 3 031 514 B1**

(12) **EUROPEAN PATENT SPECIFICATION**

(45) Date of publication and mention
of the grant of the patent:
**09.05.2018 Bulletin 2018/19**

(51) Int Cl.:
***B01D 53/86*** *(2006.01)*      ***B01D 53/50*** *(2006.01)*
***B01J 23/30*** *(2006.01)*

(21) Application number: **15783948.1**

(22) Date of filing: **17.06.2015**

(86) International application number:
**PCT/JP2015/067447**

(87) International publication number:
**WO 2016/072109 (12.05.2016 Gazette 2016/19)**

(54) **EXHAUST GAS TREATMENT SYSTEM AND TREATMENT METHOD**

RAUCHGASBEHANDLUNGSSYSTEM UND RAUCHGASBEHANDLUNGSVERFAHREN

SYSTÈME ET PROCÉDÉ DE TRAITEMENT DE GAZ D'ÉCHAPPEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.11.2014 JP 2014227579**

(43) Date of publication of application:
**15.06.2016 Bulletin 2016/24**

(73) Proprietor: **Mitsubishi Hitachi Power Systems, Ltd.**
**Yokohama 220-8401 (JP)**

(72) Inventors:
• **MASUDA, Tomotsugu**
**Yokohama-shi**
**Kanagawa 220-8401 (JP)**
• **MIYOSHI, Takahito**
**Yokohama-shi**
**Kanagawa 220-8401 (JP)**

• **HIGASHINO, Koji**
**Tokyo 108-8215 (JP)**

(74) Representative: **Henkel, Breuer & Partner**
**Patentanwälte**
**Maximiliansplatz 21**
**80333 München (DE)**

(56) References cited:
**EP-A1- 0 534 087**      **EP-A1- 1 452 222**
**EP-A1- 3 045 220**      **WO-A1-2012/154868**
**DE-A1- 2 811 788**      **JP-A- H0 884 912**
**JP-A- H05 220 348**      **JP-A- H07 227 523**
**JP-A- H10 128 064**      **JP-A- H10 225 620**
**JP-A- 2005 118 687**      **JP-A- 2005 279 372**
**JP-A- 2006 136 869**      **JP-A- 2014 126 298**
**US-A- 4 221 768**      **US-A1- 2006 083 671**
**US-A1- 2014 018 231**

**Description**

TECHNICAL FIELD

The present invention relates to a flue gas treatment system and to a flue gas treatment method, and more specifically, relates to a flue gas treatment system and a flue gas treatment method for treating combustion flue gases including sulfur trioxide generated in coal-fired power generation plants or low-grade fuel-fired power generation plants.

BACKGROUND ART

In recent years, a flue gas treatment system and a flue gas treatment method that treat combustion flue gases combusted in various types of furnaces for power generation plants such as coal-fired power generation plants and low-grade fuel-fired power generation plants have been strongly desired in order to prevent air pollution. Such flue gases contain nitrogen oxides ($NO_x$) and a large amount of sulfur oxides ($SO_x$), and in order to treat them, a denitration apparatus, a precipitator, a desulfurization apparatus, and the like are installed in plants. However, among $SO_x$, sulfur trioxides ($SO_3$) are corrosive and are a factor that inhibits stable operation and long-term operation of power generation plants.

For a method of treating such $SO_3$, a method has been known in which ammonium ($NH_3$) is charged to a combustion flue gas as a reductant, then the combustion flue gas is brought into contact with a denitration catalyst constituted by ruthenium (Ru) carried on titania ($TiO_2$), and thereby $NO_x$ is reduced and generation of $SO_3$ in combustion flue gases is prevented by a reaction expressed by the following expression (1) (Patent Literature 1). In addition, another method has been known, in which the reduction ratio of $SO_3$ is improved by using such a denitration catalyst produced in a form in which Ru is carried on a carrier constituted by two of titania, silica ($SiO_2$), and tungsten oxide ($WO_3$) and the remaining one is coated as a base material (Patent Literature 2).

[Chemical Formula 1]

$$SO_3 + 2NH_3 + O_2 \rightarrow SO_2 + N_2 + 3H_2O \qquad (1)$$

However, even in the exemplary cases recited in Patent Literatures 1 and 2, the oxidation reaction expressed by the following expression (2) predominantly progresses during treatment of combustion flue gases, and therefore the concentration of $SO_3$ may increase. In addition, failures may thus occur within the system, and it is necessary to stop the operation of the plant every time such a failure occurs, and therefore, stable operation, long-term operation, and the like of the plant may be affected.

Patent Literature 3 discloses a system and a method for removing nitrogen oxide and sulfur trioxide from exhaust gas using a catalyst, wherein a sulfur trioxide reducing catalyst on the upstream side and a denitration catalyst on the downstream side are arranged in series with respect to the flow direction of exhaust gas. In a preferred embodiment, the denitration catalyst comprises a carrier containing titania, and at least one metal selected from Mo, W and V supported on said carrier.

Patent Literature 4 discloses a method for selectively removing nitrogen oxides from exhaust gas, the method comprising contacting the exhaust gas with ammonia in the presence of a catalyst which comprises 30 to 99% by weight of at least one catalytic oxide selected from a binary oxide comprising titanium and silicon and a ternary oxide comprising Ti, Zr and Si, and 1 to 70% by weight of a catalytic oxide comprising at least one element selected from the group consisting of V, W, Mo, U, Cu, Fe, Cr, Mn and Ce.

Patent Literature 5 discloses a method for removing arsenic compounds adsorbed on a denitration catalyst, the method comprising heat-treating the denitration catalyst in a reducing atmosphere while exposing the catalyst to hydrocarbon compounds except for methane and oxygen-containing carbon compounds. The denitration catalyst comprises a titanium dioxide carrier, and has a transition metal oxide such as $V_2O_5$, $WO_3$ or $MoO_3$ supported thereon as the active component.

Patent Literature 6 discloses a method for removing nitrogen oxides from exhaust gas using a titanium dioxide-based catalyst, the method comprising adding an alcohol to the exhaust gas prior to passing it over the catalyst, and subsequently passing the exhaust gas over the catalyst at a temperature of from 150 to 550°C. In a preferred embodiment, the catalyst further comprises one or more elements selected from the group consisting of V, W, Mo, Fe, Ni, Co, Cu, Cr and Zr.

Patent Literature 7 discloses a system and a method for removing nitrogen oxides and sulfur trioxide from exhaust gas using a catalyst, the system comprising an exhaust gas treatment catalyst comprising a carrier which is formed of titania-tungsten oxide, titania-silica or titania-silica-tungsten oxide and which carries ruthenium, and a substrate which is coated with the carrier. In a preferred embodiment, the substrate is formed of a titania-tungsten oxide-based denitration catalyst.

[Chemical Formula 2]

$$SO_2 + 1/2O_2 \rightarrow SO_3 \qquad (2)$$

CITATION LIST

Patent Literature

[Patent Literature 1] JP 3495591
[Patent Literature 2] JP 4813830
[Patent Literature 3] EP 1 452 222 A1
[Patent Literature 4] US 4,221,768 A
[Patent Literature 5] US 2014/018231 A1
[Patent Literature 6] EP 0 534 087 A1
[Patent Literature 7] US 2006/083671 A1

SUMMARY OF INVENTION

Technical Problem

Under these circumstances, an object of the present invention is to provide a flue gas treatment system and a flue gas treatment method that reduces treatment costs, reduces $NO_x$ contained in a combustion flue gas in an oxygen atmosphere, and reduces the concentration of $SO_3$ compared to that available conventionally, and thus, enables stable long-term operation of a plant. The invention is defined by the claims.

Solution to Problem

In a first aspect, the present invention thus relates to a flue gas treatment system for removing $NO_x$ and $SO_3$ from a combustion flue gas that includes $NO_x$ and $SO_3$, the system including:

a first addition device that is configured for adding $NH_3$ to the combustion flue gas;
a second addition device that is configured for adding a 3C-5C olefinic hydrocarbon (unsaturated hydrocarbon) to the combustion flue gas; and
a denitration and $SO_3$ reduction apparatus that is configured for simultaneously performing denitration of $NO_x$ and reduction of $SO_3$ in the combustion flue gas, and that is further configured for reducing $SO_3$ into $SO_2$ in the presence of the olefinic hydrocarbon,
wherein said second addition device is installed closely to the first addition device,
and wherein said denitration and $SO_3$ reduction apparatus is positioned downstream of the first addition device and downstream of the second addition device and contains a catalyst which does not include a noble metal.

Note that in descriptions given herein and in the claims, the term "and/or" is used, in conformity with JIS Z 8301, to collectively express a combination of two terms used in parallel to each other and either one of the two terms, i.e., to collectively express the three possible meanings that can be expressed by the two terms.
In addition, the second additive may be an olefinic hydrocarbon having an allyl structure, and $C_3H_6$ is preferable as the olefinic hydrocarbon.
In addition, it is preferable that the load of the $C_3H_6$ be 0.1 to 2.0 by molar ratio of $C_3H_6/SO_3$.
The catalyst may include an oxide, a mixed oxide, or a complex oxide selected from the group consisting of $TiO_2$, $TiO_2$-$SiO_2$, $TiO_2$-$ZrO_2$, and $TiO_2$-$CeO_2$ as a carrier. It is preferable that $SiO_2$ in the $TiO_2$-$SiO_2$ complex oxide be contained within a range of 5% to 60% by a percentage ratio of $SiO_2/(TiO_2 + SiO_2)$.
The flue gas treatment system may further include an air preheater that is arranged on a back stream side of the denitration and $SO_3$ reduction apparatus and that is configured for recovering heat from the combustion flue gas; an electric precipitator that is arranged on a back stream side of the air preheater and that is configured for collecting dust from the combustion flue gas; and a denitration apparatus that is arranged on a back stream side of the electric precipitator and that is configured for absorbing and removing $SO_2$ remaining in the combustion flue gas or obtained by reducing $SO_3$ by bringing the $SO_2$ into contact with slurry formed from calcium carbonate.

In the flue gas treatment system, the combustion flue gas may be a flue gas from a low-grade fuel-fired power generation plant, and the system may further include a third addition device that is arranged on a front stream side of the electric precipitator and that is configured for further adding $NH_3$ and/or $CaCO_3$ to the combustion flue gas including $SO_3$ remaining therein as a third additive.

In a second aspect, the present invention relates to a flue gas treatment method for removing $NO_x$ and $SO_3$ in a combustion flue gas including $NO_x$ and $SO_3$, the method including a denitration and $SO_3$ reduction step of simultaneously performing denitration of $NO_x$ and reduction of $SO_3$ in the combustion flue gas by adding $NH_3$ that is a first additive and a second additive that is a 3C-5C olefinic hydrocarbon (unsaturated hydrocarbon) to the combustion flue gas before bringing the combustion flue gas into contact with a catalyst that does not include a noble metal.

Advantageous Effects of Invention

According to the present invention, a flue gas treatment system and a flue gas treatment method are provided, which enable the stable long-term operation of a plant by reducing $NO_x$ in a combustion flue gas and reducing the concentration of $SO_3$ more compared with that conventionally available.

BRIEF DESCRIPTION OF DRAWINGS

[FIG. 1] FIG. 1 is a schematic diagram showing a first embodiment of the flue gas treatment system and the flue gas treatment method according to the present invention.
[FIG. 2] FIG. 2 is a schematic diagram showing a second embodiment of the flue gas treatment system and the flue gas treatment method according to the present invention.
[FIG. 3] FIG. 3 is a view showing a denitration effect and an effect of reducing $SO_3$ into $SO_2$ by an $SO_3$ reductant ($C_3H_6/SO_3$ = 2) by a simulation of an actual machine for Example 1 of the flue gas treatment system and the flue gas treatment method according to the present invention.
[FIG. 4] FIG. 4 is a view showing continuous operation time of an air preheater (AH) by a simulation of an actual machine for different levels of concentration of $SO_3$ in a combustion flue gas for Example 1 of the flue gas treatment system and the flue gas treatment method according to the present invention.
[FIG. 5] FIG. 5 is a view showing a denitration effect and an effect of reducing $SO_3$ into $SO_2$ by an $SO_3$ reductant ($C_3H_6/SO_3$ = 2) by a simulation of an actual machine for Example 2 of the flue gas treatment system and the flue gas treatment method according to the present invention.
[FIG. 6] FIG. 6 is a view showing continuous operation time of an electric precipitator (EP) by a simulation of an actual machine for different levels of concentration of $SO_3$ in a combustion flue gas for Example 1 of the flue gas treatment system and the flue gas treatment method according to the present invention.
[FIG. 7] FIG. 7 is a view showing a denitration effect and an effect of reducing $SO_3$ into $SO_2$ by an $SO_3$ reductant ($C_3H_6/SO_3$ = 0.5) by a simulation of an actual machine for Example 3 of the flue gas treatment system and the flue gas treatment method according to the present invention.
[FIG. 8] FIG. 8 is a view showing a denitration effect and an effect of reducing $SO_3$ into $SO_2$ by an $SO_3$ reductant ($C_3H_6/SO_3$ = 0.9) by a simulation of an actual machine for Example 3 of the flue gas treatment system and the flue gas treatment method according to the present invention.
[FIG. 9] FIG. 9 is a view showing a denitration effect and an effect of reducing $SO_3$ into $SO_2$ by an $SO_3$ reductant ($C_3H_6/SO_3$ = 2) by a simulation of an actual machine for Example 4 of the flue gas treatment system and the flue gas treatment method according to the present invention.
[FIG. 10] FIG. 10 is a view showing a relationship between a catalyst composition and the rate of oxidation of $SO_2$ into $SO_3$ for Example 4 of the flue gas treatment system and the flue gas treatment method according to the present invention.
[FIG. 11] FIG. 11 is a view showing an effect of reducing $SO_3$ to $SO_2$ by an $SO_3$ reductant ($C_3H_6/SO_3$ = 2) by a simulation of an actual machine for Example 5 of the flue gas treatment system and the flue gas treatment method according to the present invention.
[FIG. 12] FIG. 12(a) is a view showing an increase ratio of pressure drop ratio in a conventional actual machine for Example 6 of the flue gas treatment system and the flue gas treatment method according to the present invention, and FIG. 12(b) is a view showing the concentration of $SO_3$ and the concentration of leaked $NH_3$ in a conventional actual machine.
[FIG. 13] FIG. 13(a) is a view showing an increase ratio of assumed pressure drop ratio when an $SO_3$ reductant is used in a conventional actual machine for Example 6 of the flue gas treatment system and the flue gas treatment method according to the present invention, and FIG. 13(b) is a view which shows an assumed concentration of $SO_3$

and an assumed concentration of leaked $NH_3$ when an $SO_3$ reductant is used in an actual machine.

[FIG. 14] FIG. 14 is a view showing variation of the concentration of $SO_3$ in a combustion flue gas for Example 7 of the flue gas treatment system and the flue gas treatment method according to the present invention.

[FIG. 15] FIG. 15 is a view showing a ratio of reduction of $SO_3$ obtained when a $SO_3$ reductant is used for Example 8 of the flue gas treatment system and the flue gas treatment method according to the present invention.

[FIG. 16] FIG. 16 is a view showing a relationship between decomposition activation energy of the $SO_3$ reductant and $SO_3$ reduction rate constant for Example 8 of the flue gas treatment system and the flue gas treatment method according to the present invention.

DESCRIPTION OF EMBODIMENTS

The flue gas treatment system and the flue gas treatment method according to the present invention will be described below with reference to embodiments shown in attached drawings. A flue gas combusted in a furnace of a boiler in an oxygen atmosphere such as a presence of oxygen will be referred to as a "combustion flue gas". The stream of gas is herein referred to as a "front stream" or "back stream" in relation to the direction of flow of a combustion flue gas.

[Flue gas treatment system]

(First embodiment)

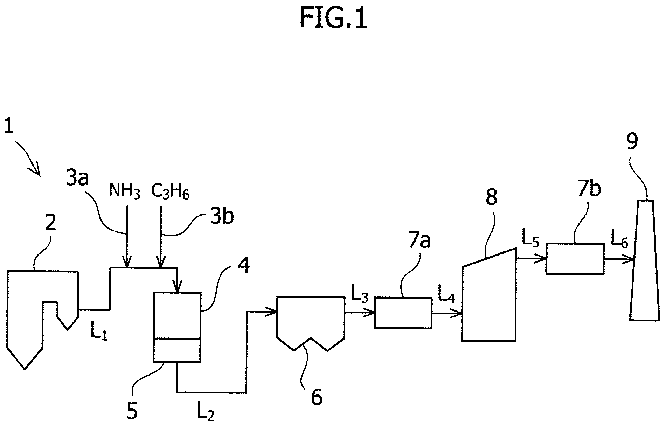

A first embodiment of the flue gas treatment system according to the present invention will be described with reference to FIG. 1. Referring to FIG. 1, a flue gas treatment system 1 shown in FIG. 1 is installed in a coal-fired power generation plant and at least includes a boiler 2; a first addition device 3a; a second addition device 3b; a denitration apparatus 4; an air preheater 5; a precipitator 6; heat recovery and reheating devices 7a and 7b; a desulfurization apparatus 8; and a stack 9. Note that a configuration at least constituted by at least the first addition device 3a, the second addition device 3b, and the denitration apparatus 4 is herein, and in claims, referred to as a denitration and $SO_3$ reduction apparatus.

The boiler 2 combusts an externally fed boiler fuel in a furnace and feeds combustion flue gases generated by the combustion to the denitration apparatus 4. The flue gas generated by combustion at least includes $SO_3$ generated by oxidation of $SO_2$.

The first addition device 3a is an injection pipe installed on a front stream side of the denitration apparatus 4 and injects ammonia ($NH_3$), which is a first additive, into the combustion flue gas. The first addition device 3a injects ammonia to denitrate nitrogen oxides in a flue gas by selective catalytic reduction.

The second addition device 3b is an injection pipe installed closely to the first addition device 3a on a front stream side of the denitration apparatus 4 and injects a second additive into the flue gas. The second addition device 3b collaborates with the denitration apparatus 4 to reduce $SO_3$ in the combustion flue gas into $SO_2$ and reduce the concentration of $SO_3$ in the combustion flue gas. In addition to the form of injection pipes, a plurality of spray nozzles can be used as the form of the first and the second addition devices 3a and 3b, and a plurality of nozzles arranged along the direction of flow of the combustion flue gas is suitable. The second addition device 3b herein, and in the claims, is also referred to as an "$SO_3$ reductant injection device".

The second additive injected from the second addition device 3b is an $SO_3$ reductant which primarily $SO_3$ can be reduced into $SO_2$, and is an olefinic hydrocarbon (unsaturated hydrocarbon) expressed by general formula: $C_nH_{2n}$ (n is an integer of 3 to 5). For the second additive, one or more selected from the group consisting of propylene ($C_3H_6$) and butene ($C_4H_8$) are preferable; and one or more selected from the group consisting of $C_3H_6$, which is a hydrocarbon compound with an allyl structure ($CH_2$=$CH$-$CH_2$-), 2-butene such as cis-2-butene and trans-2-butene, and isobutene (iso-$C_4H_8$) are more preferable, and $C_3H_6$ is particularly preferable. With this configuration, $SO_3$ can be reduced into $SO_2$ in an oxygen atmosphere and thus the concentration of $SO_3$ in a combustion flue gas can be reduced.

If $C_3H_6$ is used as the second additive, it is preferable that the load of the second additive be 0.1 to 2.0 by molar ratio of $C_3H_6/SO_3$. If the molar ratio of the second additive is less than 0.1, the oxidation of $SO_2$ may become predominant and thus $SO_3$ may abruptly increase, and in contrast, if the molar ratio of the second additive is more than 2.0, then a large amount of unreacted excessive $C_3H_6$ may be discharged. By controlling the amount of the second additive in the above-described range, the performance of eliminating $SO_3$ in the combustion flue gas can be improved. Note that the effect of removing $SO_3$ can be obtained outside the range specified above.

The denitration apparatus 4 is arranged on a back stream side of the first and the second addition devices 3a and 3b, and a known selective catalytic reduction (SCR) apparatus installed in existing plants can be employed. The denitration apparatus 4 includes a denitration catalyst and brings a combustion flue gas including the first additive into contact with the denitration catalyst. After the contact with the denitration catalyst, NOX such as NO and $NO_2$ in the combustion flue gas are decomposed into nitrogen and steam to be denitrated by reactions expressed by the following expressions (3) to (5). If a denitration catalyst including a denitration active component such as vanadium oxide ($V_2O_5$) is used as the denitration apparatus 4, the efficiency of denitration becomes high but oxidation of $SO_2$ may progress.
[Chemical Formula 3]

$$NO + NH_3 + 1/4O_2 \rightarrow N_2 + 3/2H_2O \qquad (3)$$

$$NO_2 + 2NH_3 + 1/2O_2 \rightarrow 3/2N_2 + 3H_2O \qquad (4)$$

$$NO + NO_2 + 2NH_3 \rightarrow 2N_2 + 3H_2O \qquad (5)$$

In addition, the denitration apparatus 4 according to the present embodiment reduces $SO_3$ in the combustion flue gas into $SO_2$ by collaboration with the second addition device 3b and thus reduces the concentration of $SO_3$ in the combustion flue gas by reactions expressed by the following expressions (6) to (11).
[Chemical Formula 4]

$$SO_3 + CH_3OH + 3/4O_2 \rightarrow SO_2 + 1/2CO + 1/2CO_2 + 2H_2O \qquad (6)$$

$$SO_3 + C_2H_5OH + 5/42O_2 \rightarrow SO_2 + CO + CO_2 + 2/5H_2O \qquad (7)$$

$$SO_3 + C_2H_4 + 5/2O_2 \rightarrow SO_2 + CO + CO_2 + 2H_2O \qquad (8)$$

$$SO_3 + 3/2C_3H_6 + 41/83O_2 \rightarrow SO_2 + 9/4CO + 9/4CO_2 + 6H_2O \qquad (9)$$

$$SO_3 + 3/2C_3H_8 + 63/8O_2 \rightarrow SO_2 + 9/4CO + 9/4CO_2 + 6H_2O \qquad (10)$$

$$SO_3 + 3/2C_4H_8 + 13/2O_2 \rightarrow SO_2 + 3CO + 3CO_2 + 6H_2O \qquad (11)$$

The denitration apparatus 4 includes, in its inside, a catalyst structure constituted by one or more catalysts combined together in a plurality of layers. In the present embodiment, the number of catalyst layers in the denitration apparatus 4 can be increased and the catalyst can be regenerated for the denitration apparatus 4. By increasing the number of the catalyst layers and by carrying out regeneration of the catalysts, the rate of oxidation of $SO_2$ in the denitration apparatus increases, and thus the concentration of $SO_3$ in the flue gas increases. However, in the present embodiment, the decrease of the amount of reduction of $SO_3$ can be greater than the increase of the concentration of $SO_3$ in the flue gas. Accordingly, even if the number of the catalyst layers is increased and the catalysts are regenerated, the concentration of $SO_3$ can be reduced.

The catalyst is a catalyst in which the active component is carried on a carrier which is an oxide, a mixed oxide, and/or a composite oxide. More specifically, examples of the carrier include an oxide of one or more of elements selected from the group consisting of titanium (Ti), silicon (Si), zirconium (Zr), and cerium (Ce) and/or a mixed oxide and/or a composite oxide of two or more of elements selected from the above group. Among them, it is preferable that the carrier be an oxide or a mixed oxide or a composite oxide selected from the group consisting of $TiO_2$, $TiO_2$-$SiO_2$, $TiO_2$-$ZrO_2$, and $TiO_2$-$CeO_2$, and it is more preferable that the carrier be a composite oxide of $TiO_2$ or $TiO_2$-$SiO_2$.

It is preferable that $SiO_2$ in the $TiO_2$-$SiO_2$ complex oxide be 5% to 60%, more preferably 12% to 21%, by a percentage ratio of $SiO_2/(TiO_2 + SiO_2)$. By controlling the amount of $SiO_2$ in a $TiO_2$-$SiO_2$ complex oxide in the above-described range, oxidation of $SO_2$ can be suppressed and the effect of the second additive for reducing $SO_3$ into $SO_2$ can be improved even at the same amount of the carried active component. If the above ratio is 5% or less, the effect of suppressing oxidation of $SO_2$ may not be achieved. Note that herein, and in the claims, the term "percentage ratio" refers to a ratio of the weight of $SiO_2$ versus 100 for the total weight (wt.) of $TiO_2$ and $SiO_2$, and the term "weight" can be substituted by a term "mass".

The catalyst can be a honeycomb structure body. However, the shape of the catalyst is not limited to this, and examples of the shape of the catalyst include a spherical shape, a cylindrical shape, a powder body, a porous flat plate body, and the like. The complex oxide can be prepared by a process in which an alkoxide compound a chloride, a sulfate, or an acetate of the above-described elements is mixed, then the resulting mixture is further mixed with water and then stirred in the form of an aqueous solution or sol for hydrolysis. The complex oxide may also be prepared by a known coprecipitation process instead of the above-described sol-gel process.

The active component is a metal oxide of one or more selected from the group consisting of vanadium oxide ($V_2O_5$), tungsten oxide ($WO_3$), molybdenum oxide ($MoO_3$), manganese oxide ($Mn_2O_3$), manganese dioxide ($MnO_2$), nickel oxide (NiO), and cobalt oxide ($Co_3O_4$). With this configuration, an active metal carried by the catalyst acts as an active site, and thus increase of $SO_3$ in the combustion flue gas can be prevented in an oxygen atmosphere without using expensive metals such as ruthenium (Ru) and the denitration of $NO_x$ such as $NO_2$ can be efficiently performed in an oxygen atmosphere. It is preferable that the active component, among these metal oxides, be one or more selected from the group consisting of vanadium oxide ($V_2O_5$), molybdenum oxide ($MoO_3$), and tungsten oxide ($WO_3$).

It is preferable that a catalytic reaction by the denitration apparatus 4 be carried out within a temperature range of 250°C to 450°C, more preferably 300°C to 400°C. If the temperature is 300°C or less, the performance of the catalyst may degrade due to degradation of the catalyst in the denitration apparatus 4, and in contrast, if the temperature exceeds 400°C, the second additive may be self-degraded and thus poor reduction of $SO_3$ may occur.

Note that the catalyst can be produced by applying a method known per se as a method basically used in producing a denitration catalyst. In addition, the concentration of $SO_3$ in a combustion flue gas can be reduced by reducing $SO_3$ to $SO_2$. Accordingly, a configuration may be employed in which the denitration activity the catalyst itself and the rate of oxidation of $SO_2$ are increased and the catalyst amount is reduced in accordance with the level of reduction of $SO_3$.

The air preheater 5 is arranged on a back stream side of the denitration apparatus 4, and an air preheater (AH) installed in an existing plant can be employed. The air preheater 5 is provided with a heat transfer element for introducing combustion air into the boiler 2, and recovers the heat from the combustion flue gas by heat exchange between the combustion flue gas and the combustion air by using the heat transfer element. By performing the heat recovery, the temperature of the combustion flue gas is lowered to a predetermined temperature and the temperature of the combustion air is increased, and thus the efficiency of combustion in the boiler is improved. In the present embodiment, the concentration of $SO_3$ flowing into the air preheater 5 has been decreased. With this configuration, the $SO_3$ in the combustion flue gas is converted into gaseous or mist-like concentrated sulfuric acid ($H_2SO_4$) by a reaction with $H_2O$ as expressed by the following expression (12), and thus corrosion of metallic members and increase of the amount of accumulated ash, which may occur due to such corrosion, can be suppressed.

[Chemical Formula 5]

$$SO_3 + H_2O \rightarrow H_2SO_4 \qquad (12)$$

Further, if $SO_3$ exists in the flue gas in the air preheater 5 at a high concentration, a part of the $SO_3$ may be condensed due to the metal members provided inside the air preheater 5, which may promote corrosion of the metal members and the like and accumulation of ash. As a result, conventionally, the pressure drop inside the air preheater 5 may increase, and it is necessary to stop the operation of the plant for maintenance operations such as washing with water. According to the present embodiment, $SO_3$ in the flue gas which flows into the air preheater 5 is reduced, thus the concentration of $SO_3$ is decreased, and therefore the problems described above can be suppressed and stable and long-term operation of the plant is thus enabled. In addition, the air preheater 5 can optionally include a thermometer (not shown). If this configuration is employed, the metal temperature of the metallic members and the moisture content in the combustion flue gas are estimated and the pressure drop in the air preheater 5 and the concentration of $SO_3$ for enabling the stable operation are calculated, and according to result of the estimation and calculation, the amount of the second additive to be fed can be controlled so that the concentration of $SO_3$ is to be controlled at a threshold value or less, for example. With this configuration, the amount of the second additive can be reduced, and thus the running costs can be reduced.

The precipitator 6 is arranged on a back stream side of the air preheater 5, and an electric precipitator (EP) or a bag filter installed in an existing plant can be employed. The precipitator 6 collects dust in the combustion flue gas by using an electric precipitation machine, bag filter, or the like. In the present embodiment, the concentration of $SO_3$ which flows into the precipitator 6 has decreased. Accordingly, corrosion of the precipitator 6 and the piping system thereof, adhesion of dust to electrodes, and poor charging and clogging by ash, which may occur due to the dust adhered to the electrodes, can be prevented. Accordingly, the precipitator 6 can be continuously operated, and thus the stable and long-term operation of the plant is enabled. In addition, installation of a wet type EP, which is installed if the concentration of $SO_3$ in the flue gas is high, would not be required.

The heat recovery/reheating device 7a is arranged on a front stream or on a back stream of the precipitator 6, and is a heat recovery device of a gas-gas-heater (GGH) installed in an existing plant. The heat recovery/reheating device 7a recovers heat from the combustion flue gas and cools the combustion flue gas by heat exchange. The heat recovery/reheating device 7a includes metal members such as a heat exchanger (not shown). In the present embodiment, because the concentration of $SO_3$ in the flue gas which flows into heat recovery/reheater 7a has been decreased, corrosion of metal members such as a heat exchanger arranged inside the heat recovery/reheating device can be suppressed and adhesion and accumulation of lime ash in the heat recovery/reheating device can also be suppressed.

The desulfurization apparatus 8 is arranged on a back stream side of the precipitator 6 and the heat recovery/reheater 7a, and is a flue-gas desulfurization (FGD) apparatus installed in an existing plant. The desulfurization apparatus 8 brings $SO_2$ remaining in the combustion flue gas or reduced $SO_2$ into contact with lime slurry formed by suspending limestone (calcium carbonate: $CaCO_3$) in water to absorb and remove the $SO_2$ by a reaction expressed by the following expression (13). In addition, the desulfurization apparatus 8 oxidizes the lime slurry that has absorbed $SO_2$ with air supplied through an air supply line (not shown) to form plaster slurry ($CaSO_4/2H_2O$) and collects and removes $SO_2$ in the form of plaster.

[Chemical Formula 6]

$$SO_2 + CaCO_3 + 1/2H_2O \rightarrow CaSO_3 \cdot 1/2H_2O + CO_2 \qquad (13)$$

$$CaSO_3 \cdot 1/2H_2O + 1/2O_2 + 3/2H_2O \rightarrow CaSO_4 \cdot 2H_2O \qquad (14)$$

The heat recovery/reheating device 7b is arranged on a back stream side of the desulfurization apparatus 8, and is a reheater of a gas-gas-heater installed in an existing plant. The heat recovery/reheating device 7b reheats the combustion flue gas on a front stream side of the stack 9 with the heat recovered by the heat recovery/reheating device 7a. The heat recovery/reheating device 7b includes metal members such as a heat exchanger (not shown). In the present embodiment, the concentration of $SO_3$ in the flue gas which flows into heat recovery/reheater 7b has decreased. Accordingly, corrosion of metal members such as a heat exchanger arranged inside the heat recovery/reheating device 7b can be suppressed and adhesion and accumulation of lime ash in the heat recovery/reheating device can also be suppressed.

From the stack 9, treated combustion flue gas is discharged by using fans (not shown). The stack 9 is installed in an inside or an outside of the precipitator 6, and can have a configuration for discharging the treated combustion flue gas. In the present embodiment, the flue gas which flows into the stack 9 includes substantially no $SO_3$. Accordingly, $SO_3$ does not enter the stack 9, and thus emission of blue smoke can be prevented.

[Flue gas treatment method]

A first embodiment of the flue gas treatment method according to the present invention will be described with reference to its mode of operation of the first embodiment of the flue gas treatment system having the above-described configuration.

The flue gas treatment method according to the present embodiment is a flue gas treatment method of removing NOX and $SO_3$ in a flue gas in a coal-fired power generation plant, and at least includes a denitration and $SO_3$ reduction process, an air preheating process, a heat recovery and reheating process, a desulfurization process, and a discharge process.

In the denitration and $SO_3$ reduction process, before a combustion flue gas generated in the boiler 2 is brought into contact with the denitration catalyst, the first additive and the second additive are added to the combustion flue gas in a line $L_1$, and the combustion flue gas is denitrated by the denitration apparatus 4 to reduce $SO_3$ to $SO_2$. More specifically, the denitration and $SO_3$ reduction process includes a first addition process and a second addition process. In the first addition process, ammonia ($NH_3$), which is the first additive, is injected by the first addition device 3a into the flue gas supplied from the boiler 2 through $L_1$. In the second addition process, a compound including an H element and a C element, which is the second additive, is injected by the second addition device 3b. It is preferable that the first and the second addition processes be carried out in the line $L_1$ from the boiler 2 to the denitration apparatus 4 by using a plurality of nozzles arranged along the direction of flow of the combustion flue gas. In addition, it is preferable that the first addition process and the second addition process be carried out at the same time. Note that for the method of adding the first and the second additives, a method can be employed in which air, inert gas, steam, and the like are added to the previously vaporized first and second additives and then the mixture is diluted before adding the additives, for example. Note that herein, and in the claims, the second addition process will also be referred to as an "$SO_3$ reduction process".

In the air preheating process, heat is recovered from the flue gas that has undergone the denitration and $SO_3$ reduction process. More specifically, heat is recovered from the flue gas supplied from the denitration apparatus 4 by using the air preheater 5 by heat exchange to cool the combustion flue gas.

In the first heat recovery and reheating process, heat is recovered from the flue gas which has undergone the dust collection process to cool the combustion flue gas. More specifically, heat is recovered by the heat recovery/reheating device 7a from the flue gas supplied from the precipitator 6 through a line $L_3$ by heat exchange to cool the combustion flue gas.

In the desulfurization process, $SO_2$ remaining in the combustion flue gas which has undergone the first heat recovery and reheating process or $SO_2$ generated by reduction of $SO_3$ is brought into contact with slurry formed from calcium carbonate, and thereby such $SO_2$ is removed. More specifically, $SO_2$ remaining in the combustion flue gas supplied from the heat recovery/reheating device 7a through a line $L_4$ or $SO_2$ generated by reduction is brought into contact with lime slurry formed by suspending limestone (calcium carbonate: $CaCO_3$) in water, and thereby such $SO_2$ is absorbed and removed. In addition, the lime slurry which has absorbed $SO_2$ may also be treated by oxidation with the air supplied through an air supply line (not shown) to form plaster slurry ($CaSO_4/2H_2O$) to collect and remove such $SO_2$ in the form of plaster.

In the second heat recovery and reheating process, the flue gas which has undergone the desulfurization process is reheated. More specifically, the combustion flue gas supplied from the desulfurization apparatus 8 through a line $L_5$ is reheated by the heat recovery/reheating device 7b and the reheated combustion flue gas is fed into the stack 9 through a line $L_6$.

In the discharge process, the combustion flue gas treated by using a fan (not shown) after having undergone the second heat recovery and reheating process.

[Flue gas treatment system]

(Second embodiment)

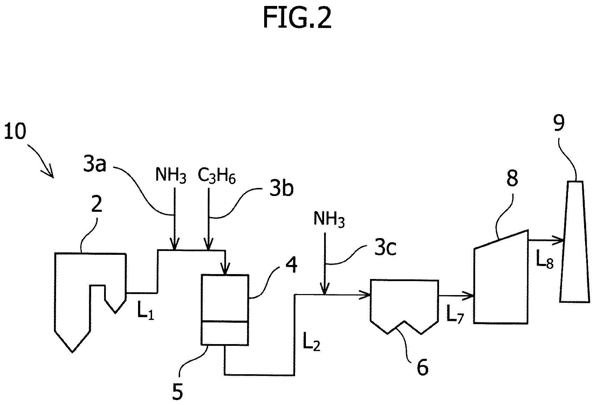

A second embodiment of the flue gas treatment system will be described with reference to FIG. 2. The components that are the same as those of the first embodiment are provided with the same reference numerals and symbols shown in FIG. 1 and detailed descriptions thereof will not be repeated below. Referring to FIG. 2, a flue gas treatment system 10 is different from the flue gas treatment system of the first embodiment at least in such points that it is installed in a low-grade fuel-fired power generation plant and that it includes a third addition apparatus 3c. The low-grade fuel includes heavy oil, petro coke, vacuum residue (VR), and low-grade coal.

For the third addition device 3c, an injection pipe installed in an existing plant, which is arranged on a back stream of the air preheater 5 and on a front stream of the precipitator 6, can be employed. The third addition device 3c further injects ammonia ($NH_3$), which is a third additive, to the combustion flue gas to which the first additive and the second additive have been added by the first addition device 3a and the second addition device 3b, on a front stream of the precipitator 6. When ammonia is injected by the third addition device 3c, $SO_3$ in the flue gas reacts with $NH_3$ by a reaction expressed by the following expression (15) and generates ammonium sulfate (($NH_4$)$HSO_4$) in the form of solid particles. $SO_3$ is thereby collected together with dust.
[Chemical Formula 7]

$$SO_3 + NH_3 + H_2O \rightarrow (NH_4)HSO_4 \qquad (15)$$

In the flue gas treatment system according to the second embodiment, the configuration is described in which the heat recovery/reheating device 7a and the heat recovery/reheating device 7b are not included as an example. However, the heat recovery/reheating device 7a and the heat recovery/reheating device 7b can be included according to requirements of the low-grade fuel-fired power generation plant such as the purpose of use and the like of the plant.

[Flue gas treatment method]

A second embodiment of the flue gas treatment method according to the present invention will be described with reference to a mode of operation of the second embodiment of the flue gas treatment system having the above-described configuration. Processes similar to those of the first embodiment will not be repeatedly described below.

The flue gas treatment method according to the present embodiment is a flue gas treatment method of treating a combustion flue gas in a low-grade fuel-fired power generation plant, and at least includes a third addition process of further adding $NH_3$ and/or $CaCO_3$ as a third additive to the combustion flue gas containing $SO_3$ remaining in the combustion flue gas before the dust collection process. For the third addition process, an injection pipe installed in the line $L_2$ from the air preheater 5 to the precipitator 6 can be used, and the third addition process is performed in $L_2$ and/or the precipitator 6. For a method of injecting the third additive, a method can be employed in which the third additive is vaporized, then air, inert gas, steam, and the like are added thereto, and the resulting mixture is diluted and then added to the combustion flue gas. The flue gas which has undergone the third addition process is discharged from the stack 9 via the precipitator 6 and/or a line $L_7$ and the desulfurization apparatus 8 and a line $L_8$.

According to the present embodiment, the same effects as those of the first embodiment can be exhibited, and also the amount of $NH_3$, calcium carbonate, and the like to be injected to decrease the concentration of $SO_3$ in the third addition device 3c and the desulfurization apparatus 8, which are arranged in the subsequent stage, can be reduced. Accordingly, the cost of the chemicals can be reduced.

In the present embodiment, the exemplary system and the method do not include the heat recovery/reheating device 7a and the heat recovery/reheating device 7b; however, the present invention is not limited to this. In the flue gas treatment system and the flue gas treatment method for a low-grade fuel-fired power generation plant also, a heat recovery/reheating device with a configuration similar to that of the first embodiment can be arranged on a back stream side of the precipitator 6 or on a front stream side of the stack. With this configuration also, because the concentration

of $SO_3$ in the flue gas has been decreased, corrosion of metal members such as a heat exchanger provided in the installed heat recovery/reheating device and adhesion and accumulation of lime ashes in the heat recovery/reheating device can be suppressed.

In addition, in the first and the second embodiments, the number of the catalyst layers can be further increased and the catalysts can be regenerated for the plurality of catalyst layers of the denitration apparatus. By increasing the number of the catalyst layers and by regenerating the catalysts, the rate of oxidation of $SO_2$ in the denitration apparatus increases, and thus the concentration of $SO_3$ in the combustion flue gas is increased. However, in the present embodiment, denitration can be performed by the second addition device 3b, and $SO_3$ can be reduced by the second addition device 3b. Further, because the decrease of the amount of reduction of $SO_3$ can be greater than the increase of the concentration of $SO_3$ in the flue gas, even if the number of the catalyst layers is increased and the catalysts are regenerated, the concentration of $SO_3$ can be reduced.

The regeneration of the catalyst can be implemented by a method in which a degraded catalyst is washed with water and a chemical to remove degraded components from the catalyst and the catalyst is then impregnated with active components of the catalyst where necessary, such as vanadium oxide, tungsten oxide, and molybdenum oxide.

In addition, the system of the first and the second embodiments can be optionally a system in which a CO converter is provided, which further includes an oxidation catalyst layer arranged on a front stream side of the denitration apparatus 4. The CO converter is provided in order to perform oxidation treatment on carbon monoxide (CO) generated as unburned fraction of the reductant having been added as the second additive and a byproduct gas thereof. In the system having the configuration described above, it is made possible to take measures for reducing the unburned fraction of the second additive to be newly discharged from a denitration and $SO_3$ reduction apparatus and the like and CO. A large amount of carbon monoxide (CO) is generated particularly in the low-grade fuel-fired power generation plant according to the second embodiment, and the large amount of CO can be further reduced in the system. Further, the CO converter may be arranged on a back stream side of the air preheater or on a back stream side of the desulfurization apparatus. If the CO converter is arranged in the desulfurization apparatus, sulfurous acid gas absorbed by the desulfurization can be converted into sulfuric acid gas, and thus the efficiency of the desulfurization can be improved. On the other hand, if the CO converter is arranged on a back stream side of the air preheater, CO generated in the air preheater can be reduced and the temperature of the oxidation catalyst layer can be controlled to about 200°C or less, and thereby reoxidation of $SO_2$ into $SO_3$ can be efficiently prevented. Further, the oxidation catalyst arranged in the above-described oxidation catalyst layer can include a carrier constituted by an oxide, a mixed oxide, or a complex oxide of one or more selected from the group consisting of titania ($TiO_2$), silica ($SiO_2$), and alumina ($Al2O_3$). In addition, the carrier is capable of carrying a catalyst constituted by a first component including one or more selected from the group consisting of platinum (Pt), lead (Pd), ruthenium (Ru), rhodium (Rh), iridium (Ir), and silver (Ag); and a second component which includes at least one compound including elements such as phosphorus (P), arsenic (As), and antimony (Sb). By using the catalyst having the above-described configuration, the above-described effects can be achieved, the denitration effect can be achieved, and an effect of efficiently suppressing oxidation of $SO_2$ into $SO_3$ can be achieved.

EXAMPLES

The effects of the present invention will be shown by more specifically describing the present invention with reference to examples. However, the flue gas treatment system and the flue gas treatment method according to the present invention is not limited by the examples.

[Example 1]

The effect of an $SO_3$ reductant (the second additive) for reducing $SO_3$ in a flue gas generated under the same conditions as those in the coal-fired power generation plant was examined.

(Preparation of catalyst A)

By applying a method which is basically used in production of a denitration catalyst and publicly known per se, a catalyst A was prepared.

($SO_3$ reduction performance and denitration performance test I)

By bench-scale testing in which an actual machine is assumed, two pieces in which three pieces of catalysts A were serially combined were prepared, and the pieces were respectively used as Test Example 1 and Test Example 2. A flue gas with predetermined properties was allowed to flow through the test examples, and the concentration of $SO_3$ and the concentration of $NO_x$ were measured at the outlet of the first layer, at the outlet of the second layer, and at the outlet of the third layer of the catalyst layer. In Test Example 1, the $SO_3$ reductant was not added at the inlet of the catalyst layer, and in Test Example 2, propylene ($C_3H_6$) was added as the $SO_3$ reductant. The load of $C_3H_6$ at the inlet of the catalyst layer was 2:1 by molar ratio of $C_3H_6:SO_3$. The concentration of $SO_3$ was analyzed by a deposition titration method after the sampling was done. The test conditions are shown in Table 1 below. In the Table, "AV" denotes the area velocity (total contact area by gas amount/catalyst), and the unit of AV is $Nm^3/(m^2 \cdot h)$, which is denoted by the International System of Units as $(m^3(normal))/m^2 \cdot h$. Ugs denotes the superficial velocity (flow rate of fluid/cross section of the honeycomb catalyst).

[Table 1]

| Test Condition I | | |
|---|---|---|
| Gas amount | | $17\ m^3N/h$ |
| Ugs | | 2 mN/sec. |
| AV | First layer outlet | $24.9\ Nm^3/(m^2 \cdot h)$ |
| | Second layer outlet | $12.4\ Nm^3/(m^2 \cdot h)$ |
| | Third layer outlet | $8.30\ Nm^3/(m^2 \cdot h)$ |
| Gas temperature | | 360°C |
| Gas properties | NOx | 150 ppm |
| | $SO_x$ | 800 ppm |
| | $SO_3$ | 10 ppm |
| | $O_2$ | 4% |
| | $CO_2$ | 10% |
| | $H_2O$ | 10% |
| | $N_2$ | Balance |

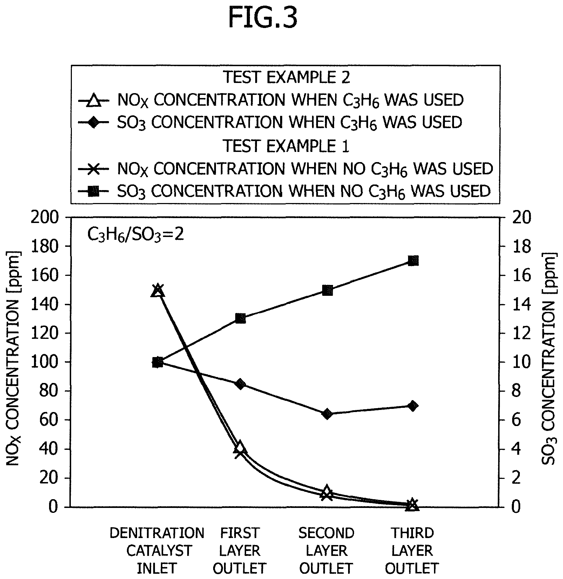

FIG. 3 shows variation of the concentration of $SO_3$ (ppm) and the concentration of $NO_x$ (ppm) in the flue gas reduced by the $SO_3$ reductant when the flue gas was treated under the coal-fired conditions. Referring to FIG. 3, in Test Example 1 and Test Example 2, the concentration of $NO_x$ in the flue gas decreased from 150 ppm to about 40 ppm at the outlet of the first layer, to about 10 ppm at the outlet of the second layer, and to about 5 ppm at the outlet of the third layer of the catalyst layer. The concentration of $SO_3$ in the flue gas of Test Example 1 increased from 10 ppm to about 13 ppm at the outlet of the first layer, to about 15 ppm at the outlet of the second layer, and to about 17 ppm at the outlet of the third layer of the catalyst layer. In contrast, the concentration of $SO_3$ of Test Example 2 decreased from 10 ppm to about 8 ppm at the outlet of the first layer, to about 6 ppm at the outlet of the second layer, and to about 7 ppm at the outlet of the third layer.

It is understood from the above-described results that the same denitration effect as in the case in which $C_3H_6$ is added to a flue gas treated under coal-fired conditions can be achieved by adding $C_3H_6$ to the flue gas under the coal-fired conditions for all the regions of AV. In contrast, if no $SO_3$ reductant is added, the concentration of $SO_3$ in the flue gas may increase. On the other hand, if $C_3H_6$ is added to the flue gas treated under the coal-fired conditions as the $SO_3$ reductant, $SO_3$ in the flue gas can be reduced and the concentration of $SO_3$ can be reduced in the regions in which AV is high (i.e., the regions in which the catalyst amount is small) and the regions in which AV is low (i.e., the regions in which the catalyst amount is large).

Next, influences on the actual machine from the concentration of $SO_3$ in a combustion flue gas in an existing coal-fired power generation plant were examined. Assuming that an air preheater (AH) was installed in an existing coal-fired power generation plant, the continuous operation time was estimated. The continuous operation time was calculated based on the relationship between the concentration of $SO_3$ in the flue gas and the number of times of washing of the air preheater with water in the same time.

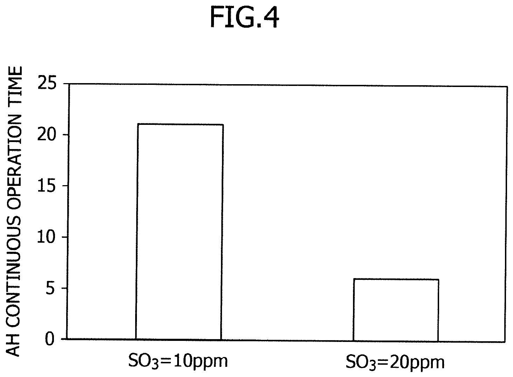

FIG. 4 shows the continuous operation time (months) of the air preheater for different levels of concentration of $SO_3$ in the flue gas. Referring to FIG. 4, the concentration of $SO_3$ in the flue gas to which the $SO_3$ reductant was not added was 20 ppm, and in the case in which the $SO_3$ reductant was added to the flue gas, the concentration of $SO_3$ was 10 ppm. In the case in which the concentration of $SO_3$ in the flue gas was 20 ppm, the continuous operation time for the air preheater was 6 months. In contrast, in the case in which the concentration of $SO_3$ was 10 ppm, the continuous operation time for the air preheater was 21 months. From these results, it was verified that the continuous operation time for the air preheater could be increased by adding $C_3H_6$ as the $SO_3$ reductant, even in an actual machine, by three times or more based on estimation by the past records.

[Example 2]

The effect of the $SO_3$ reductant (the second additive) for reducing $SO_3$ in a flue gas generated under the same conditions as those in the low-grade fuel-fired power generation plant was examined.

($SO_3$ reduction performance and denitration performance test II)

Two pieces in which three pieces of catalysts A were serially combined were prepared, and the pieces were respectively used as Test Example 3 and Test Example 4. In Test Example 3 and Test Example 4, similarly to Example 1, the concentration of $SO_3$ and the concentration of $NO_x$ were measured at the outlet of the first layer, at the outlet of the second layer, and at the outlet of the third layer of the catalyst layer. In Test Example 3, the $SO_3$ reductant was not added at the inlet of the catalyst layer, and in Test Example 4, $C_3H_6$ was added as the $SO_3$ reductant. Similarly to Example 1, the load of $C_3H_6$ at the inlet of the catalyst layer was 2:1 by molar ratio of $C_3H_6$:$SO_3$. The test conditions are shown in Table 1 below.

[Table 2]

| Test Condition II | | |
|---|---|---|
| Gas amount | | 19.7 m$^3$N/h |
| Ugs | | 2.7 mN/sec. |
| AV | First layer outlet | 30 Nm$^3$/(m$^2$·h) |
| | Second layer outlet | 15 Nm$^3$/(m$^2$·h) |
| | Third layer outlet | 10 Nm$^3$/(m$^2$·h) |
| Gas temperature | | 360°C |
| Gas properties | $NO_x$ | 150 ppm |
| | $SO_x$ | 4000 ppm |
| | $SO_3$ | 150 ppm |
| | $O_2$ | 2% |
| | $CO_2$ | 10% |
| | $H_2O$ | 10% |
| | $N_2$ | Balance |

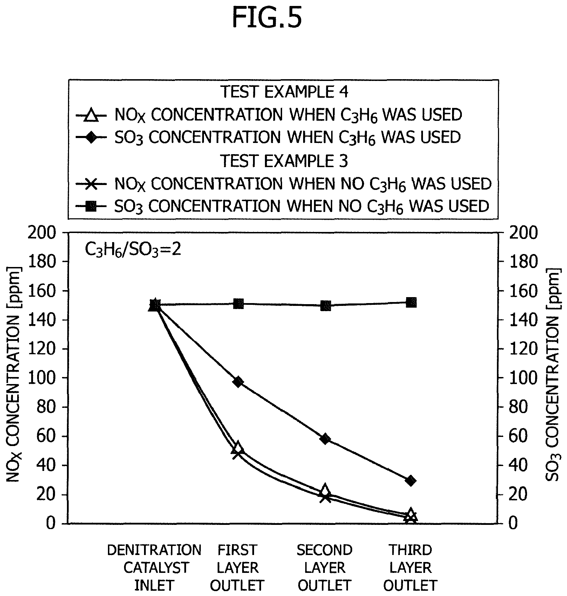

FIG. 5 shows variation of the concentration of $SO_3$ (ppm) and the concentration of $NO_x$ (ppm) in the flue gas reduced by the $SO_3$ reductant when the flue gas was treated under the low-grade fuel-fired conditions. Referring to FIG. 5, Referring to FIG. 3, in Test Example 3 and Test Example 4, the concentration of $NO_x$ in the flue gas decreased from 150 ppm to about 50 ppm at the outlet of the first layer, to about 20 ppm at the outlet of the second layer, and to about 5 ppm at the outlet of the third layer of the catalyst layer. The concentration of $SO_3$ in the flue gas of Test Example 3 increased from 150 ppm to about 150 ppm at the outlet of the first layer, to about 150 ppm at the outlet of the second layer, and to about 155 ppm at the outlet of the third layer of the catalyst layer. In contrast, the concentration of $SO_3$ of Test Example 4 decreased from 150 ppm to about 95 ppm at the outlet of the first layer, to about 60 ppm at the outlet of the second layer, and to about 30 ppm at the outlet of the third layer.

It is understood from the above-described results that the same denitration effect as the case in which $C_3H_6$ is added to a flue gas treated under low-grade fuel-fired conditions can also be achieved by adding $C_3H_6$ to the flue gas under the low-grade fuel-fired conditions for all the regions of AV. In contrast, if no $SO_3$ reductant is added, the concentration of $SO_3$ in the flue gas may increase. On the other hand, if $C_3H_6$ is added to the flue gas treated under the low-grade fuel-fired conditions as the $SO_3$ reductant, $SO_3$ in the flue gas can be reduced and the concentration of $SO_3$ can be reduced in the regions in which AV is high (i.e., the regions in which the catalyst amount is small) and the regions in which AV is low (i.e., the regions in which the catalyst amount is large).

Next, influences on the actual machine from the concentration of $SO_3$ in a combustion flue gas in an existing low-grade fuel-fired power generation plant were examined. Assuming that a dry type electric precipitator (EP) was installed in an existing coal-fired power generation plant, the continuous operation time was estimated. For the EP, the continuous operation time was calculated based on the relationship between the concentration of $SO_3$ in the flue gas and the number of times of accumulated ash removal operations.

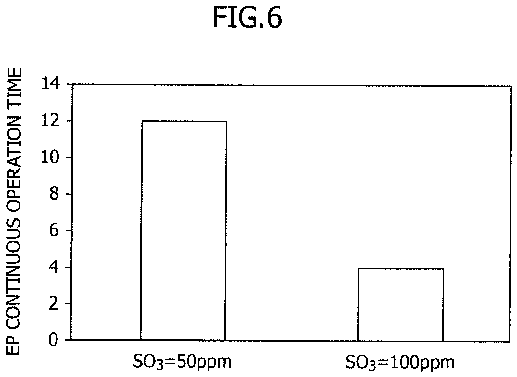

FIG. 6 shows the continuous operation time (months) of the electric precipitator for different levels of concentration of $SO_3$ in the combustion flue gas. Referring to FIG. 6, the concentration of $SO_3$ in the flue gas to which the $SO_3$ reductant was not added was 100 ppm, and in the case in which the $SO_3$ reductant was added to the flue gas, the concentration of $SO_3$ was 50 ppm. In the case in which the concentration of $SO_3$ in the flue gas was 100 ppm, the continuous operation time for the electric precipitator was 4 months. In contrast, in the case in which the concentration of $SO_3$ was 50 ppm, the continuous operation time for the electric precipitator was 12 months. From these results, it was verified that the continuous operation time for the electric precipitator could be increased by adding $C_3H_6$ as the $SO_3$ reductant, also in an actual machine installed in the low-grade fuel-fired power generation plant, by about three times or more.

[Example 3]

Variation of concentration of $SO_3$ in a combustion flue gas which occurs due to addition of an $SO_3$ reductant (the second additive) when the number of denitration layers of the denitration apparatus is increased and the denitration catalysts are regenerated in an existing coal-fired power generation plant was examined.

Assuming that a construction work for increasing the number of the catalyst layers of the denitration apparatus installed in an existing coal-fired power generation plant was performed to additionally install a third denitration layer constituted by a catalyst A, the concentration of $SO_3$ and the concentration of $NO_x$ were estimated. Similarly to Example 1, the concentration of $SO_3$ and the concentration of $NO_x$ were measured at the outlet of the first layer, at the outlet of the second layer, and at the outlet of the third layer of the catalyst layer. A case in which no $SO_3$ reductant was added was used as Test Example 5, and a case in which $C_3H_6$ was added as the $SO_3$ reductant was used as Test Example 6. The test conditions were similar to those of Example 1 except that the load of $C_3H_6$ at the inlet of the catalyst layer was 0.5:1 by molar ratio of $C_3H_6:SO_3$.

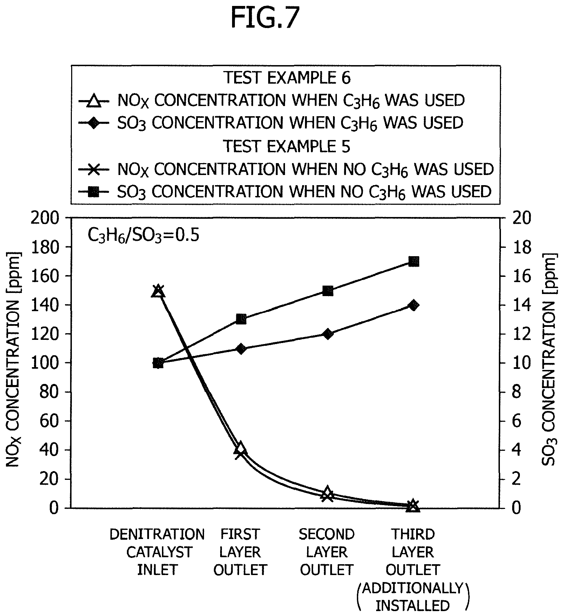

FIG. 7 shows variation of the concentration of $SO_3$ (%) and the concentration of $NO_x$ (%) occurring due to addition of the $SO_3$ reductant when the number of the catalyst layers was increased. Referring to FIG. 7, the concentration of $NO_x$ of Test Example 5 and Test Example 6 decreased from 150 ppm to about 40 ppm at the outlet of the first layer, to about 10 ppm at the outlet of the second layer, and to about 5 ppm at the outlet of the third layer of the catalyst layer. In addition, the concentration of $SO_3$ of Test Example 5 was increased from 10 ppm to about 13 ppm at the outlet of the first layer, to about 15 ppm at the outlet of the second layer, and to about 17 ppm at the outlet of the third layer of the catalyst layer. On the other hand, the concentration of $SO_3$ of Test Example 6 increased from 10 ppm to about 11 ppm at the outlet of the first layer, to about 12 ppm at the outlet of the second layer, and to about 14 ppm at the outlet of the third layer of the catalyst layer.

Subsequently, a degraded catalyst A was regenerated assuming that the number of the catalyst layers of the denitration apparatus in an existing plant had been increased. The regeneration of the catalyst was performed by impregnating vanadium, the active component of the catalyst, after washing the catalyst with chemicals. After the catalyst was regenerated, the concentration of $SO_3$ and the concentration of $NO_x$ were measured at the outlet of the first layer, at the outlet of the second layer, and at the outlet of the third layer of the catalyst layer. A case in which no $SO_3$ reductant was added was used as Test Example 7, and a case in which propylene ($C_3H_6$) was added as the $SO_3$ reductant was used as Test Example 8. The test conditions were similar to those of Example 1 except that the load of $C_3H_6$ at the inlet of the catalyst layer was 0.9:1 by molar ratio of $C_3H_6:SO_3$.

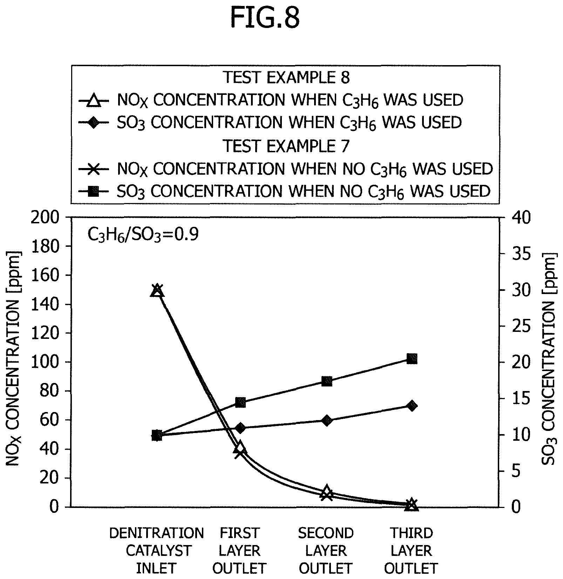

FIG. 8 shows variation of the concentration of $SO_3$ (%) and the concentration of $NO_x$ (%) occurring due to addition of the $SO_3$ reductant after the catalyst regeneration. Referring to FIG. 8, the concentration of $NO_x$ of Test Example 7 and Test Example 8 decreased from 150 ppm to about 40 ppm at the outlet of the first layer, to about 10 ppm at the outlet of the second layer, and to about 5 ppm at the outlet of the third layer of the catalyst layer. In addition, the concentration of $SO_3$ of Test Example 7 increased from 10 ppm to about 15 ppm at the outlet of the first layer, to about 17 ppm at the outlet of the second layer, and to about 20 ppm at the outlet of the third layer of the catalyst layer. On the other hand, the concentration of $SO_3$ of Test Example 8 was increased from 10 ppm to about 11 ppm at the outlet of the first layer, to about 12 ppm at the outlet of the second layer, and to about 14 ppm at the outlet of the third layer of the catalyst layer.

It is known from these results that if the number of the catalyst layers is increased or the catalysts are regenerated in an actual machine, the catalyst amount increases and thus the concentration of $SO_3$ increases. However, it was verified that increase of $SO_3$ in the combustion flue gas that might occur due to addition of a catalyst could be prevented by adding $C_3H_6$ to the combustion flue gas as the $SO_3$ reductant even in the case in which the number of the catalyst layers had been increased in an actual machine. In addition, it was verified that increase of $SO_3$ in the flue gas could be prevented by adding $C_3H_6$ to the flue gas as the $SO_3$ reductant even if the catalysts had been regenerated in an actual machine.

[Example 4]

The effect of the $SO_3$ reductant (the second additive) for reducing $SO_3$ into $SO_2$ was examined for a case of a denitration catalyst with a composition different from the above ones.

(Preparation of catalyst B)

As a source of titanium, an aqueous solution of titanyl sulfate in sulfuric acid was prepared, aqueous ammonia was added to water, silica sol was further added thereto, and the previously prepared aqueous solution of titanyl sulfate in sulfuric acid was gradually added dropwise to the solution to obtain $TiO_2$-$SiO_2$ gel. The gel was filtered, and the residue was washed with water and then dried at 200°C for 10 hours. Then the obtained product was fired at 600°C for 6 hours in an air atmosphere and further crushed by using a crusher, and then classified by using a classifier to obtain a powder body with an average particle size of 10 $\mu$m. Ammonium paratungstate $((NH_4)_{10}H_{10}W_{12}O_{46}\cdot6H_2O)$ was added to and dissolved in a solution of monoethanolamine, then ammonium metavanadate $(NH_3VO_3)$ was dissolved therein to obtain a homogeneous solution. The $TiO_2$-$SiO_2$ powder was added to and mixed into this solution, and a honeycomb of 150 mm was formed by extrusion by using an extrusion molding machine.

($SO_3$ reduction performance and denitration performance test III)

A case in which the percentage ratio of $SiO_2/(TiO_2 + SiO_2)$ of the catalyst B was 5% was used as Test Example 9, and a case in which the percentage ratio of $SiO_2/(TiO_2 + SiO_2)$ of the catalyst B was 14% was used as Test Example 10. Similarly to Example 1, two pieces in which three pieces of catalysts B were serially combined were prepared, and the concentration of $SO_3$ and the concentration of $NO_x$ were measured at the outlet of the first layer, at the outlet of the second layer, and at the outlet of the third layer of the catalyst layer. In Test Example 9 and Test Example 10, propylene $(C_3H_6)$ was added as an $SO_3$ reductant. The conditions were the same as those of Example 1.

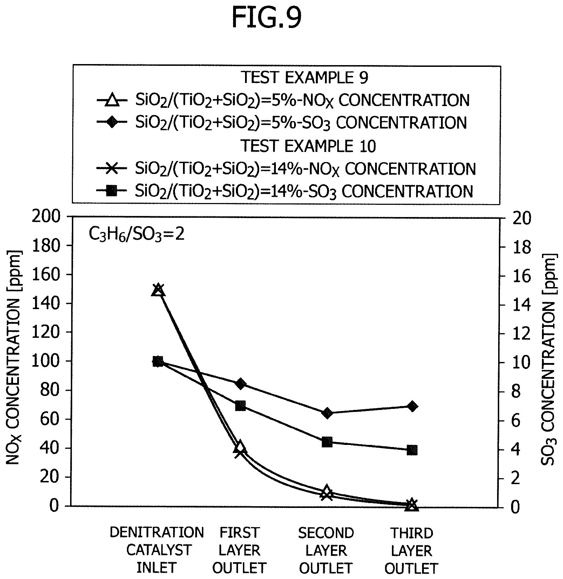

FIG. 9 shows variation of the concentration of $NO_x$ (%) and the concentration of $SO_3$ (%) in the flue gas at the respective outlets of the catalyst layer. Referring to FIG. 9, the concentration of $NO_x$ in the flue gas of Test Examples 9 and 10 decreased from 150 ppm to about 40 ppm at the outlet of the first layer, to about 10 ppm at the outlet of the second layer, and to about 5 ppm at the outlet of the third layer of the catalyst layer. The concentration of $SO_3$ in the flue gas in Test Example 9 decreased from 10 ppm to about 8 ppm at the outlet of the first layer, to about 6 ppm at the outlet of the second layer, and to about 7 ppm at the outlet of the third layer of the catalyst layer. In contrast, the concentration of $SO_3$ of Test Example 10 decreased from 10 ppm to about 7 ppm at the outlet of the first layer, to about 4 ppm at the outlet of the second layer, and to about 4 ppm at the outlet of the third layer of the catalyst layer.

(Analysis of the $SO_2$ oxidation rate)

Then, similarly to the preparation in Test Examples 9 and 10, Test Examples 11 and 12 were newly prepared so that the percentage ratio of $SiO_2/(TiO_2 + SiO_2)$ would become 12% and 21%, respectively. Ratios of the $SO_2$ oxidation rate of Test Examples 9 to 12 were calculated based on the variation of the concentration of $SO_3$ in cases in which no propylene was supplied, and based on the calculated ratios, ratios of the $SO_2$ oxidation rate by the variation of the percentage ratio of $SiO_2/(TiO_2 + SiO_2)$ were examined.

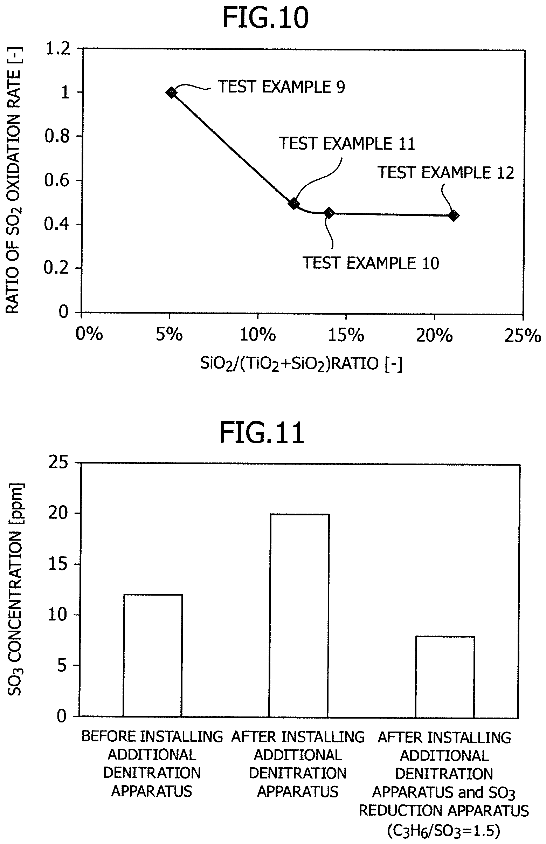

FIG. 10 shows ratios of $SO_2$ oxidation rate by variation of the percentage ratio of $SiO_2/(TiO_2 + SiO_2)$. Referring to FIG. 10, in Test Example 9, in which the percentage ratio of $SiO_2/(TiO_2 + SiO_2)$ in the catalyst was 5%, the ratio of $SO_2$ oxidation rate was 1. On the other hand, in Test Example 11, in which the percentage ratio of $SiO_2/(TiO_2 + SiO_2)$ in the catalyst was 12%, the ratio of $SO_2$ oxidation rate decreased to about 0.5; in Test Example 10, in which the above percentage ratio was 14%, the ratio of $SO_2$ oxidation rate decreased to about 0.46; and in Test Example 12, in which the above percentage ratio was 21%, the ratio of $SO_2$ oxidation rate decreased to about 0.45.

From these results, the ratio of $SO_2$ oxidation rate was lower for the cases in which the percentage ratio of $SiO_2/(TiO_2 + SiO_2)$ in the catalyst was 12% to 21% than in the case in which the percentage ratio of $SiO_2/(TiO_2 + SiO_2)$ in the catalyst was 5%, and it is understood that the former cases are more preferable in terms of reduction of $SO_3$. In addition, it is known that the ratio of $SO_2$ oxidation rate remarkably increases in the range of the percentage ratio of $SiO_2/(TiO_2 + SiO_2)$ exceeding 12%. Accordingly, it is understood that if the ratio of $TiO_2$ in the catalyst is high, the $SO_2$ oxidation rate becomes high and thus the oxidation reactions quickly progress, and that if the ratio of $TiO_2$ in the catalyst is high, the concentration of $SO_3$ in the flue gas is affected. In addition, it is understood that in a denitration catalyst in which the ratio of $SiO_2$ is high, if the amount of vanadium in the active components is the same, the $SO_2$ oxidation rate

is reduced, and thus the effect of $C_3H_6$ for reducing $SO_3$ to $SO_2$ increases. Further, it is understood that although $TiO_2$ is a glass fiber component, which is a shape-retaining agent for retaining the honeycomb shape, $TiO_2$ does not contribute to reduction of the $SO_2$ oxidation rate, which is implemented by the active components such as vanadium. Accordingly, it is understood that it is necessary to adjust the ratio between $TiO_2$ and $SiO_2$ in the solvent separately from adjustment of the load of the $SO_3$ reductant, and that it is preferable that the percentage ratio of $SiO_2/(TiO_2 + SiO_2)$ in the $TiO_2$-$SiO_2$ complex oxide be within a range of 5% to 60%, more preferably in the range of 12% to 21%.

[Example 5]

Variation of the concentration of $SO_3$ in a flue gas which occurs due to the $SO_3$ reductant (the second additive) when a dry type denitration apparatus and an $SO_3$ reduction apparatus (the second addition device) are additionally installed in an existing coal-fired power generation plant in which no dry type denitration apparatus had been installed until then was examined.

Assuming that a denitration apparatus including a catalyst A and an $SO_3$ reduction device have been additionally installed in an existing coal-fired power generation plant, the concentration of $SO_3$ was estimated. The test conditions were similar to those of Example 1 except that the load of $C_3H_6$ was 1.5:1 by molar ratio of $C_3H_6$:$SO_3$.

FIG. 11 shows the variation of the concentration of $SO_3$ (ppm) across the denitration apparatus in the plant before and after the denitration apparatus and the $SO_3$ reduction device were additionally installed. Referring to FIG. 11, the concentration of $SO_3$ before the denitration apparatus was additionally installed was 12 ppm, and the concentration of $SO_3$ after the denitration apparatus was additionally installed was 20 ppm. The concentration of $SO_3$ of after the denitration apparatus and the second addition device were additionally installed was 8 ppm.

It was verified from the above results that although the temperature for heat recovery by the air preheater is usually determined in consideration of the heat exchange in the plant, the concentration of $SO_3$ would increase if a denitration apparatus is additionally installed. Accordingly, the continuous operation of the plant may be affected by the pressure drop which may occur due to corrosion of the air preheater and accumulation of ash. However, $SO_3$ can be reduced at least in an amount equal to or larger than the amount of increased concentration of $SO_3$ by additionally installing the second addition device in addition to the denitration apparatus and by supplying $C_3H_6$ from the front stream of the denitration apparatus. It is known that as a result, it is enabled to continuously operate the plant similarly to the operation of the plant performed before the additional installation of the denitration apparatus.

[Example 6]

Next, influences from the $SO_3$ reductant to the pressure drop, which may occur if the catalyst of the denitration apparatus has degraded and the amount of leaked ammonia corresponding to the part of $NO_x$ unreacted in the treatment of $NO_x$ in the coal-fired power generation plant in which the denitration apparatus and the $SO_3$ reduction device (the second addition device) have been additionally installed, was examined.

In a plant similar to that of Example 5, the concentration of leaked $NH_3$ and the concentration of $SO_3$ in the combustion flue gas were measured, and a ratio of increase of the pressure drop inside the air preheater arranged on a back stream side thereof was calculated. In addition, it was assumed that $C_3H_6$ was periodically supplied from an upstream of the denitration apparatus as the $SO_3$ reductant to decrease the concentration of $SO_3$ down to a reference value for the continuous leaked $NH_3$ or less (e.g., to 3 ppm or less). The amount of leaked $NH_3$ in the combustion flue gas was measured by an ion chromatographic analysis method, and the concentration of $SO_3$ was measured by the deposition titration method. The ratio of increase of the pressure drop was determined based on the pressure drop in the measurement target AH.

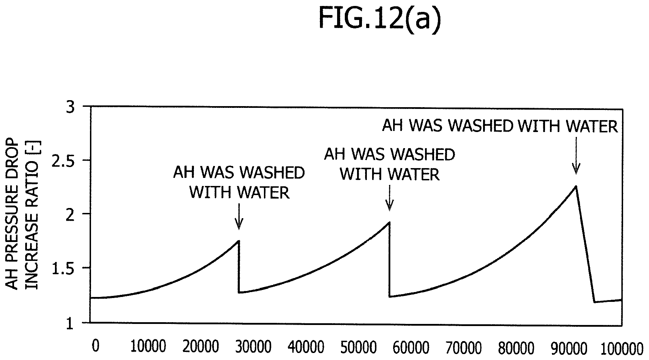

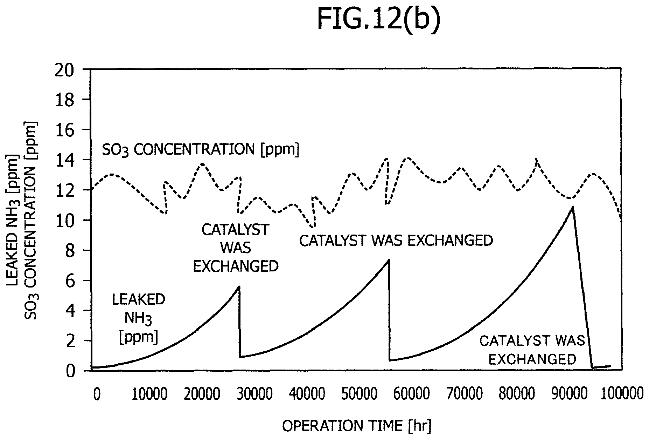

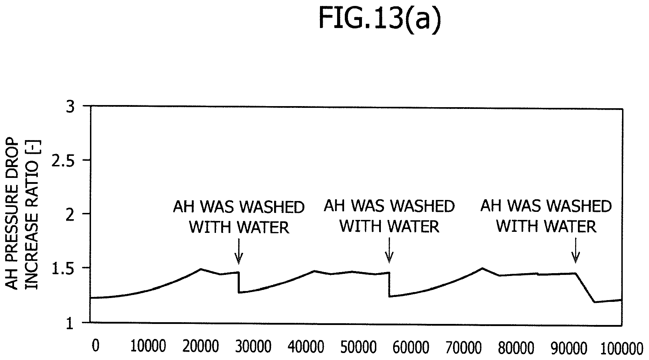

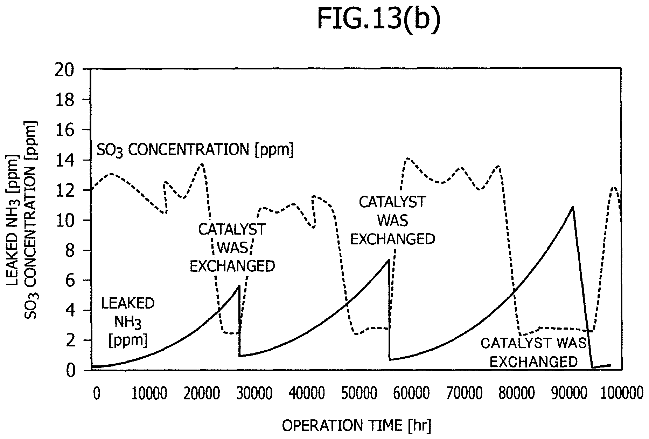

FIG. 12(a) shows the ratio of increase of pressure drop in a conventional plant, and FIG. 12(b) shows the concentration of leaked $NH_3$ (ppm) and the concentration of $SO_3$ (ppm) in the conventional plant. FIG. 13(a) shows the ratio of increase of pressure drop in the case in which $C_3H_6$ were periodically supplied as the $SO_3$ reductant in the plant, and FIG. 13(b) shows the amount of leaked ammonia (ppm) and the concentration of $SO_3$ (ppm) in the plant. Referring to FIGs. 12(a) and 12(b), when the amount of leaked ammonia increased, the ratio of increase of the pressure drop in the air preheater increased from about 1.7 to about 2.25, and the air preheater was washed with water. On the other hand, as shown in FIGs. 13(a) and 13(b), even if the amount of leaked ammonia had increased, the concentration of $SO_3$ was decreased to about 3 ppm by adding $C_3H_6$, and the ratio of increase of the pressure drop in the air preheater was about 1.5 or less.

If the amount of leaked ammonia generated from the unreacted fraction from the denitration apparatus increases, the leaked ammonia usually reacts with $SO_3$ concentrated in the combustion flue gas, and thus acid ammonium sulfate is precipitated. The level of accumulated ash in the air preheater abruptly increases mainly due to the precipitated acid ammonium sulfate, and thus the pressure drop may increase. Accordingly, it becomes necessary to stop the plant. However, it is understood from the above result that the amount of $SO_3$, which is the reaction target matter, can be reduced by installing the second addition device is installed even if the amount of leaked ammonia has increased. With this configuration, precipitation of the acid ammonium sulfate, which may be the main cause of the increase of accumulated ash, can be suppressed. As a result, it was verified that the plant can be stably operated for a long period of time.

[Example 7]

Next, variation of the concentration of $SO_3$ in the combustion flue gas in an existing coal-fired power generation plant in which the denitration apparatus and the $SO_3$ reduction device (the second addition device) have been additionally installed, which may occur due to variation of the concentration of $C_3H_6$, was examined.

In a plant similar to that of Example 5, the concentration of $SO_3$ was measured by a neutralization titration method similarly to Example 5, and based on the measurement values, the effect on the concentration of $SO_3$ achieved due to varied concentration of $C_3H_6$ was examined.

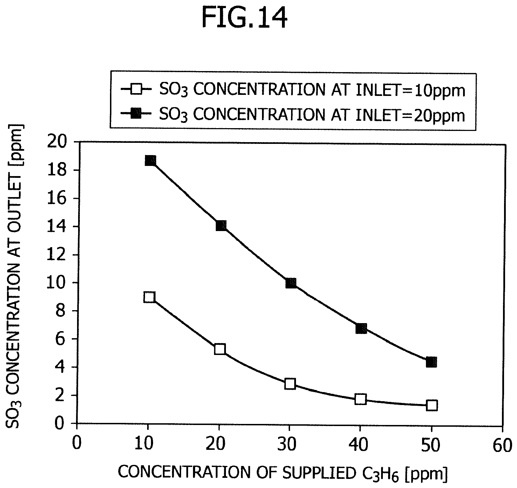

FIG. 14 shows the variation of the concentration of $SO_3$ (ppm) occurring in relation to various concentration of supplied $C_3H_6$ (ppm) in the cases in which the concentration of $SO_3$ at the inlet of the catalyst layer was 10 ppm and 20 ppm. Referring to FIG. 14, when the concentration of $SO_3$ in the combustion flue gas at the inlet of the catalyst layer was 10 ppm, the concentration of $SO_3$ at the inlet of the catalyst layer decreased to 9 ppm for the concentration of supplied $C_3H_6$ of 10 ppm; to about 8 ppm for the concentration of supplied $C_3H_6$ of 20 ppm; to about 4.5 ppm for the concentration of supplied $C_3H_6$ of 30 ppm; to about 2 ppm for the concentration of supplied $C_3H_6$ of 40 ppm; and to about 1 ppm for the concentration of supplied $C_3H_6$ of 50 ppm. When the concentration of $SO_3$ in the combustion flue gas at the inlet of the catalyst layer was 20 ppm, the concentration of $SO_3$ at the inlet of the catalyst layer decreased to 23 ppm for the concentration of supplied $C_3H_6$ of 10 ppm; to about 18 ppm for the concentration of supplied $C_3H_6$ of 20 ppm; to about 14 ppm for the concentration of supplied $C_3H_6$ of 30 ppm; to about 10 ppm for the concentration of supplied $C_3H_6$ of 40 ppm; and to about 5.5 ppm for the concentration of supplied $C_3H_6$ of 50 ppm.

It is known from the above results that as the amount of $C_3H_6$ supplied as the $SO_3$ reductant is increased (i.e., as the concentration of $C_3H_6$ is increased), the concentration of $SO_3$ in the combustion flue gas can be reduced more. It is also known that a more remarkable reduction effect can be achieved for a high concentration of $SO_3$ at the inlet of the catalyst layer of 20 ppm than for the lower concentration of 10 ppm. In addition, if the concentration of $SO_3$ at the inlet of the catalyst layer is 10 ppm, the concentration of supplied $C_3H_6$ is preferably more than 20 ppm, more preferably 30 ppm or more, and yet more preferably 40 ppm to 50 ppm. Further, it is known from these results that if the concentration of $SO_3$ at the inlet of the catalyst layer is 20 ppm, the concentration of supplied $C_3H_6$ is preferably more than 10 ppm, more preferably 20 ppm to 50 ppm, yet more preferably 30 ppm to 50 ppm, and particularly more preferably 40 ppm to 50 ppm.

[Example 8]

The effect of reducing $SO_3$ into $SO_2$ in a catalyst A with respect to the composition of a hydrocarbon compound in the case in which hydrocarbons other than propylene having different compositions were used as the $SO_3$ reductant (the second additive) was examined.

(Preparation of Test Examples 13 to 20)

A case in which methanol ($CH_3OH$) was used as the second additive was used as Test Example 13, a case in which ethanol ($C_2H_5OH$) was used as the second additive was used as Test Example 14, and a case in which propane ($C_3H_8$) was used as the second additive was used as Test Example 15. In addition, a case in which ethylene ($C_2H_4$) was used as the second additive was used as Test Example 16, a case in which propylene ($C_3H_6$) was used as the second additive was used as Test Example 17, a case in which 1-butene (1-$C_4H_8$) was used as the second additive was used as Test Example 18, a case in which 2-butene (3-$C_4H_8$) was used as the second additive was used as Test Example 19, and a case in which isobutene (iso-$C_4H_8$) was used as the second additive was used as Test Example 20.

($SO_3$ reduction performance test VI)

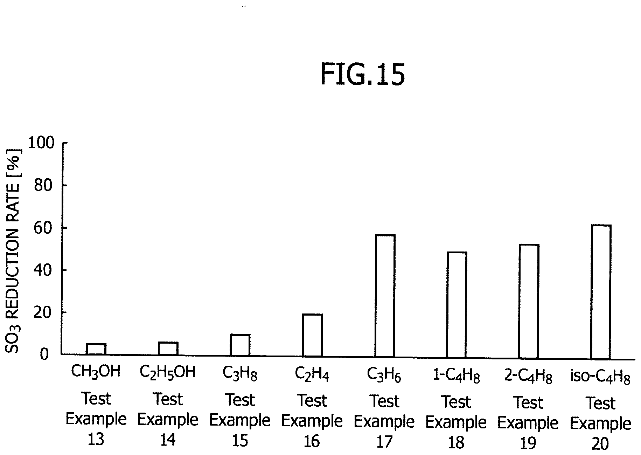

$SO_3$ reductants with different compositions were added to the combustion flue gas respectively to Test Examples 13 to 20, and the combustion flue gas was allowed to go through the catalyst layers constituted by the $SO_3$ catalysts and installed in the denitration apparatus and the $SO_3$ reduction device similar to those in Example 5, and based on the results thereof, variation of the concentration of $SO_3$ in the combustion flue gas at AV = 12.73 N $m^3/m^2 \cdot h$ was examined. The test conditions are shown in Table 3, and the test results are shown in FIG. 15. The concentration of $SO_3$ was analyzed after the sampling was done, and the $SO_3$ reduction rate was determined in the following manner. The load of $C_3H_6$ was 3.6:1 by molar ratio of $C_3H_6 : SO_3$.

$$SO_3 \text{ reduction rate (\%)} = (1 - \text{concentration of } SO_3 \text{ at catalyst layer}$$

$$\text{outlet/concentration of } SO_3 \text{ at catalyst layer inlet}) \times 100$$

[Table 3]

| Test Condition III | | |
|---|---|---|
| Gas amount | | 300 NL/h |
| Ugs | | 0.167 mN/sec. |
| AV | | 12.73 Nm$^3$/(m$^2$·h) |
| Gas temperature | | 380°C |
| Gas properties | NO$_x$ | 150 ppm |
| | SO$_x$ | 3000 ppm |
| | SO$_3$ | 100 ppm |
| | 0$_2$ | 4% |
| | CO$_2$ | 10% |
| | H$_2$O | 10% |
| | N$_2$ | Balance |

FIG. 15 shows the SO$_3$ reduction rate (%) at AV = 12.73 Nm$^3$/m$^2$·h in Test Examples 13 to 20. Referring to FIG. 15, the SO$_3$ reduction rate of Test Example 13 in which alcohols were used was 4%, and the SO$_3$ reduction rate of Test Example 14 in which alcohols were used was 6%. On the other hand, the SO$_3$ reduction rate of Test Example 15 in which saturated hydrocarbon was used was 7.2%. The SO$_3$ reduction rate of Test Example 16 in which saturated hydrocarbon was used was as high a value as 20.2%. Further, the SO$_3$ reduction rate of Test Example 17 having an allyl structure was 58.4%; the SO$_3$ reduction rate of Test Example 18 having an allyl structure was 50.2%; the SO$_3$ reduction rate of Test Example 19 having an allyl structure was 54.2%; and the SO$_3$ reduction rate of Test Example 20 having an allyl structure was 63.5%, showing very high values.

From the above results, it is understood that the concentration of SO$_3$ in the combustion flue gas can be more decreased by using C$_2$H$_4$, C$_3$H$_6$, or C$_4$H$_8$, which are a saturated hydrocarbon or an unsaturated hydrocarbon, as the SO$_3$ reductant, compared with the cases in which alcohols such as CH$_3$OH and C$_2$H$_5$OH were used. It is also understood that among them, C$_2$H$_4$, C$_3$H$_6$, or C$_4$H$_8$, which is an unsaturated hydrocarbon, can be used as the SO$_3$ reductant to effectively decrease the concentration of SO$_3$ in the combustion flue gas. In addition, it is understood that concentration of SO$_3$ in the combustion flue gas can be remarkably decreased by using a ≥3C unsaturated hydrocarbon having an allyl structure as the SO$_3$ reductant. It was estimated that this was because the decomposition activity of ≥3C unsaturated hydrocarbons having an allyl structure is high and the intermediate body thereof has high reactivity with SO$_3$.

Next, based on the elementary reaction model on the surface of the catalyst described in the following items 1 to 4, the decomposition activation energy of C$_2$H$_4$, C$_3$H$_8$, and C$_3$H$_6$ as the SO$_3$ reductant was estimated by molecular simulation.

1. Hydrocarbon adsorption reaction

Hydrocarbon (C$_x$H$_y$) + surface → C$_x$H$_y$ - surface

2. Hydrocarbon decomposition reaction (hydrogen abstraction reaction)

C$_x$H$_y$ - surface → C$_x$H$_{y-1}$ (surface-coordination) +H- surface

3. Reaction with SO$_{3(g)}$ (conversion into sulfonic acid)

C$_x$H$_{y-1}$ (surface-coordination) + SO$_{3(g)}$ → SO$_2$ + C$_x$H$_{y-1}$ - SO$_{3-}$H.surface)

4. Decomposition of $SO_3$

$$C_xH_{y-1}\text{-}SO_{3\_}H\_ \text{ surface} \rightarrow SO_2 + CO_2 + CO$$

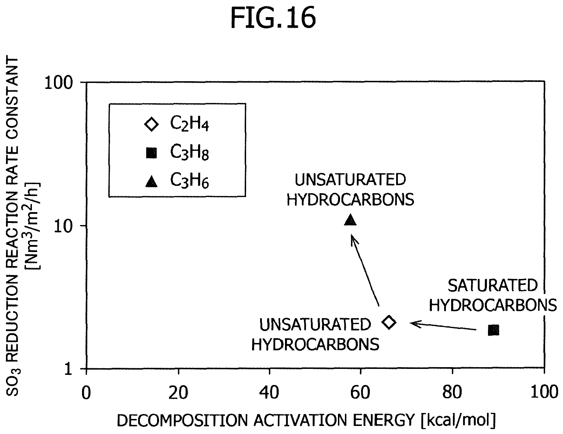

FIG. 16 shows a relationship between the decomposition activation energy (kcal/mol) in hydrogen abstraction reaction from the respective hydrocarbons on the catalyst surface and the $SO_3$ reduction reaction rate ($Nm^3/m^2/h$). Referring to FIG. 16, the $SO_3$ reduction reaction rate constant of $C_3H_8$, i.e., a saturated hydrocarbon, was 1.8, and the decomposition activation energy was 89. The $SO_3$ reduction reaction rate constant of $C_2H_4$, i.e., a saturated hydrocarbon, was 3.0, and the decomposition activation energy was 65. The $SO_3$ reduction reaction rate constant of $C_3H_6$, i.e., a $\geq$3C unsaturated hydrocarbon having an allyl structure, was 11.2, and the decomposition activation energy was 58.

From the above results, it is known that the $SO_3$ reduction reaction rate constant for the decomposition activation energy of $C_2H_4$ has a value higher than that for a saturated hydrocarbon $C_3H_8$ and that the value of the constant for $C_3H_6$ is even higher. In addition, it was verified that the decomposition activation energy and the $SO_3$ reduction reaction rate constant were correlated. It is understood that the above results of Examples were obtained because the double bond in the allyl structure of the $SO_3$ reductant was easy to decompose. In addition, it is considered that because the decomposition activation energy of the allyl structure is low, hydrogen can be easily abstracted. Accordingly, it was verified that a reductant constituted by an unsaturated hydrocarbon was effective, and that a $\geq$3C unsaturated hydrocarbon which has an allyl structure was more effective.

Industrial Applicability

According to the flue gas treatment system and the flue gas treatment method of the present invention, $NO_x$ in a combustion flue gas can be reduced and the concentration of $SO_3$ can be reduced more compared with prior art, and a plant can be stably operated for a long period of time.

Reference Signs List

| 1, 10 | Flue gas treatment system |
| 2 | Boiler |
| 3a | First addition device |
| 3b | Second addition device |
| 3c | Third addition device |
| 4 | Denitration apparatus |
| 5 | Air preheater |
| 6 | Precipitator |
| 7a, 7b | Heat recovery/reheating device |
| 8 | Desulfurization apparatus |
| 9 | Stack |

**Claims**

1. A flue gas treatment system (1, 10) for removing $NO_x$ and $SO_3$ from a combustion flue gas including $NO_x$ and $SO_3$, the system comprising:

   a first addition device (3a) that is configured for adding $NH_3$ to the combustion flue gas;
   a second addition device (3b) that is configured for adding a 3C-5C olefinic hydrocarbon (unsaturated hydrocarbon) to the combustion flue gas; and
   a denitration and $SO_3$ reduction apparatus (4) that is configured for simultaneously performing denitration of $NO_x$ and reduction of $SO_3$ in the combustion flue gas, and that is further configured for reducing $SO_3$ into $SO_2$ in the presence of the 3C-5C olefinic hydrocarbon,
   wherein said second addition device (3b) is installed closely to the first addition device (3a),
   and wherein said denitration and $SO_3$ reduction apparatus (4) is positioned downstream of the first addition device (3a) and downstream of the second addition device (3b) and contains a catalyst which does not include a noble metal.

2. The flue gas treatment system according to Claim 1, wherein the second addition device (3b) is configured for adding an olefinic hydrocarbon having an allyl structure to the combustion flue gas.

3. The flue gas treatment system according to Claim 1 or 2, wherein the second addition device (3b) is configured for adding $C_3H_6$ to the combustion flue gas.

4. The flue gas treatment system according to Claim 3, wherein the second addition device (3b) is configured for controlling the load of $C_3H_6$ at 0.1 to 2.0 by molar ratio of $C_3H_6/SO_3$.

5. The flue gas treatment system according to any one of Claims 1 to 4, wherein the catalyst includes an oxide, a mixed oxide, or a complex oxide selected from the group consisting of $TiO_2$, $TiO_2$-$SiO_2$, $TiO_2$-$ZrO_2$, and $TiO_2$-$CeO_2$ as a carrier.

6. The flue gas treatment system according to Claim 5, wherein $SiO_2$ in the $TiO_2$-$SiO_2$ complex oxide is contained within a range of 5% to 60% by a percentage ratio of $SiO_2/(TiO_2 + SiO_2)$.

7. The flue gas treatment system according to any one of Claims 1 to 6, further comprising:

an air preheater (5) that is arranged on a back stream side of the denitration and $SO_3$ reduction apparatus (4) and that is configured for recovering heat from the combustion flue gas;
an electric precipitator (6) that is arranged on a back stream side of the air preheater (5) and that is configured for collecting dust from the combustion flue gas; and
a desulfurization apparatus (8) that is arranged on a back stream side of the electric precipitator (6) and that is configured for absorbing and removing $SO_2$ remaining in the combustion flue gas or obtained by reducing $SO_3$ by bringing the $SO_2$ into contact with slurry formed from calcium carbonate.

8. The flue gas treatment system according to Claim 7,
wherein the combustion flue gas is a flue gas from a low-grade fuel-fired power generation plant, the system further comprising:
a third addition device (3c) that is arranged on a front stream side of the electric precipitator (6) and that is configured for further adding $NH_3$ and/or $CaCO_3$ to the combustion flue gas including $SO_3$ remaining therein as a third additive.

9. A flue gas treatment method of removing $NO_x$ and $SO_3$ in a combustion flue gas including $NO_x$ and $SO_3$, the method comprising:
a denitration and $SO_3$ reduction step of simultaneously performing denitration of $NO_x$ and reduction of $SO_3$ in the combustion flue gas by adding $NH_3$ that is a first additive and a second additive that is a 3C-5C olefinic hydrocarbon (unsaturated hydrocarbon) to the combustion flue gas before bringing the combustion flue gas into contact with a catalyst that does not include a noble metal.

10. The flue gas treatment method according to Claim 9, wherein the second additive is an olefinic hydrocarbon having an allyl structure.

11. The flue gas treatment method according to Claim 9 or 10, wherein the olefinic hydrocarbon is $C_3H_6$.

12. The flue gas treatment method according to Claim 11, wherein a load of the $C_3H_6$ is 0.1 to 2.0 by molar ratio of $C_3H_6/SO_3$.

13. The flue gas treatment method according to any one of Claims 9 to 12, wherein the catalyst includes an oxide, a mixed oxide, or a complex oxide selected from the group consisting of $TiO_2$, $TiO_2$-$SiO_2$, $TiO_2$-$ZrO_2$, and $TiO_2$-$CeO_2$ as a carrier.

14. The flue gas treatment method according to Claim 13, wherein $SiO_2$ in the $TiO_2$-$SiO_2$ complex oxide is contained within a range of 5% to 60% by a percentage ratio of $SiO_2/(TiO_2 + SiO_2)$.

15. The flue gas treatment method according to any one of Claims 9 to 14, the method further comprising:

an air preheating step of recovering heat from the combustion flue gas that has undergone the denitration and $SO_3$ reduction step;
a precipitation step of collecting dust from the combustion flue gas that has undergone the air preheating step; and
a denitration step of absorbing and removing $SO_2$ remaining in the combustion flue gas that has undergone the precipitation step or obtained by reducing $SO_3$ by bringing the $SO_2$ into contact with slurry formed from calcium carbonate.

16. The flue gas treatment method according to Claim 15,
wherein the combustion flue gas is a flue gas from a low-grade fuel-fired power generation plant, the method further comprising:
a third addition step of further adding $NH_3$ to the combustion flue gas before being subjected to the precipitation step including $SO_3$ remaining therein, as a third additive.

**Patentansprüche**

1. Abgasbehandlungssystem (1, 10) zur Entfernung von $NO_x$ und $SO_3$ aus einem $NO_x$ und $SO_3$ umfassenden Verbrennungsabgas, wobei das System umfasst:

eine erste Zugabevorrichtung (3a), welche dazu ausgelegt ist, $NH_3$ zu dem Verbrennungsabgas hinzuzufügen;
eine zweite Zugabevorrichtung (3b), welche dazu ausgelegt ist, einen olefinischen 3C-5C-Kohenwasserstoff (ungesättigten Kohlenwasserstoff) zu dem Verbrennungsabgas hinzuzufügen; und
eine Denitrierungs- und $SO_3$-Reduktionsvorrichtung (4), welche dazu ausgelegt ist, gleichzeitig eine Denitrierung von $NO_x$ und eine Reduktion von $SO_3$ in dem Verbrennungsabgas zu bewirken, und welche weiterhin dazu ausgelegt ist, $SO_3$ in Gegenwart des olefinischen 3C-5C-Kohlenwasserstoffs zu $SO_2$ zu reduzieren, wobei die zweite Zugabevorrichtung (3b) in der Nähe der ersten Zugabevorrichtung (3a) angeordnet ist, und wobei die Denitrierungs- und $SO_3$-Reduktionsvorrichtung (4) stromabwärts der ersten Zugabevorrichtung (3a) und stromabwärts der zweiten Zugabevorrichtung (3b) angeordnet ist und einen Katalysator enthält, welcher kein Edelmetall umfasst.

2. Abgasbehandlungssystem nach Anspruch 1, wobei die zweite Zugabevorrichtung (3b) dazu ausgelegt ist, einen olefinischen Kohlenwasserstoff mit Allylstruktur zu dem Verbrennungsabgas hinzuzufügen.

3. Abgasbehandlungssystem nach Anspruch 1 oder 2, wobei die zweite Zugabevorrichtung (3b) dazu ausgelegt ist, $C_3H_6$ zu dem Verbrennungsabgas hinzuzufügen.

4. Abgasbehandlungssystem nach Anspruch 3, wobei die zweite Zugabevorrichtung (3b) dazu ausgelegt ist, die Zufuhr von $C_3H_6$ derart zu regulieren, dass das Molverhältnis $C_3H_6/SO_3$ im Bereich von 0.1 bis 2.0 liegt.

5. Abgasbehandlungssystem nach einem der Ansprüche 1 bis 4, wobei der Katalysator ein Oxid, ein Mischoxid, oder ein komplexes Oxid ausgewählt aus der Gruppe bestehend aus $TiO_2$, $TiO_2$-$SiO_2$, $TiO_2$-$ZrO_2$ und $TiO_2$-$CeO_2$ als Träger umfasst.

6. Abgasbehandlungssystem nach Anspruch 5, wobei $SiO_2$ in dem komplexen Oxid $TiO_2$-$SiO_2$ in einem prozentualen Anteil $SiO_2/(TiO_2 + SiO_2)$ von 5% bis 60% enthalten ist.

7. Abgasbehandlungssystem nach einem der Ansprüche 1 bis 6, weiterhin umfassend:

einen Luftvorerhitzer (5), welcher stromabwärts der Denitrierungs- und $SO_3$-Reduktionsvorrichtung (4) angeordnet ist und welcher dazu ausgelegt ist, Wärme aus dem Verbrennungsabgas zurückzugewinnen;
einen elektrischen Abscheider (6), welcher stromabwärts des Luftvorerhitzers (5) angeordnet ist und welcher dazu ausgelegt ist, Staub aus dem Verbrennungsabgas aufzunehmen; und
eine Entschwefelungsvorrichtung (8), welche stromabwärts des elektrischen Abscheiders (6) angeordnet ist und welche dazu ausgelegt ist, in dem Verbrennungsabgas verbliebenes oder durch Reduktion von $SO_3$ erhaltenes $SO_2$ zu absorbieren und zu entfernen, indem das $SO_2$ mit einer aus Calciumcarbonat gebildeten Aufschlämmung in Kontakt gebracht wird.

8. Abgasbehandlungssystem nach Anspruch 7,
wobei es sich bei dem Verbrennungsabgas um ein Abgas aus einer mit minderwertigem Brennmaterial betriebenen Energieerzeugungsanlage handelt, und wobei das System weiterhin umfasst:
eine dritte Zugabevorrichtung (3c), welche stromaufwärts des elektrischen Abscheiders (6) angeordnet ist und welche dazu ausgelegt ist, weiterhin $NH_3$ und/oder $CaCO_3$ als drittes Additiv zu dem Verbrennungsabgas mit darin verbliebenem $SO_3$ hinzuzufügen.

**9.** Abgasbehandlungsverfahren zur Entfernung von $NO_x$ und $SO_3$ aus einem $NO_x$ und $SO_3$ umfassenden Verbrennungsabgas, wobei das Verfahren umfasst:

einen Denitrierungs- und $SO_3$-Reduktionsschritt, welcher das gleichzeitige Denitrieren von $NO_x$ und Reduzieren von $SO_3$ in dem Verbrennungsabgas durch Hinzufügen von $NH_3$ als erstes Additiv und eines olefinischen 3C-5C-Kohlenwasserstoffs (ungesättigten Kohlenwasserstoffs) als zweites Additiv zu dem Verbrennungsabgas sowie anschließendes Inkontaktbringen des Verbrennungsabgases mit einem Katalysator, welcher kein Edelmetall umfasst, vorsieht.

**10.** Abgasbehandlungsverfahren nach Anspruch 9, wobei es sich bei dem zweiten Additiv um einen olefinischen Kohlenwasserstoff mit Allylstruktur handelt.

**11.** Abgasbehandlungsverfahren nach Anspruch 9 oder 10, wobei es sich bei dem olefinischen Kohlenwasserstoff um $C_3H_6$ handelt.

**12.** Abgasbehandlungsverfahren nach Anspruch 11, wobei die Zufuhr von $C_3H_6$ derart ist, dass das Molverhältnis $C_3H_6/SO_3$ im Bereich von 0.1 bis 2.0 liegt.

**13.** Abgasbehandlungsverfahren nach einem der Ansprüche 9 bis 12, wobei der Katalysator ein Oxid, ein Mischoxid, oder ein komplexes Oxid ausgewählt aus der Gruppe bestehend aus $TiO_2$, $TiO_2$-$SiO_2$, $TiO_2$-$ZrO_2$ und $TiO_2$-$CeO_2$ als Träger umfasst.

**14.** Abgasbehandlungsverfahren nach Anspruch 13, wobei $SiO_2$ in dem komplexen Oxid $TiO_2$-$SiO_2$ in einem prozentualen Anteil $SiO_2/(TiO_2 + SiO_2)$ von 5% bis 60% enthalten ist.

**15.** Abgasbehandlungsverfahren nach einem der Ansprüche 9 bis 14, wobei das Verfahren weiterhin umfasst:

einen Luftvorerhitzungsschritt, welcher das Zurückgewinnen von Wärme aus dem Verbrennungsabgas vorsieht, das dem Denitrierungs- und $SO_3$-Reduktionsschritt unterzogen worden ist;
einen Abscheidungsschritt, welcher das Aufnehmen von Staub aus dem Verbrennungsabgas vorsieht, das dem Luftvorerhitzungsschritt unterzogen worden ist; und
einen Denitrierungsschritt, welcher das Absorbieren und Entfernen von $SO_2$, das in dem Verbrennungsabgas, welches dem Abscheidungsschritt unterzogen worden ist, verblieben oder durch Reduktion von $SO_3$ erhalten worden ist, durch Inkontaktbringen des $SO_2$ mit einer aus Calciumcarbonat gebildeten Aufschlämmung vorsieht.

**16.** Abgasbehandlungsverfahren nach Anspruch 15,
wobei es sich bei dem Verbrennungsabgas um ein Abgas aus einer mit minderwertigem Brennmaterial betriebenen Energieerzeugungsanlage handelt, und wobei das Verfahren weiterhin umfasst:
einen dritten Zugabeschritt, welcher das weitere Hinzufügen von $NH_3$ als drittes Additiv zu dem Verbrennungsabgas mit darin verbliebenem $SO_3$ vorsieht, bevor dieses dem Abscheidungsschritt unterzogen wird.

**Revendications**

**1.** Système de traitement de gaz d'échappement (1, 10) pour éliminer les $NO_x$ et le $SO_3$ d'un gaz d'échappement de combustion incluant des $NO_x$ et du $SO_3$, le système comprenant :

un premier dispositif d'addition (3a) qui est configuré pour ajouter du $NH_3$ au gaz d'échappement de combustion ;
un second dispositif d'addition (3b) qui est configuré pour ajouter un hydrocarbure oléfinique 3C-5C (hydrocarbure insaturé) au gaz d'échappement de combustion ; et
un appareil de dénitration et de réduction du $SO_3$ (4) qui est configuré pour réaliser simultanément la dénitration des $NO_x$ et la réduction du $SO_3$ présents dans le gaz d'échappement de combustion, et qui est en outre configuré pour réduire le $SO_3$ en $SO_2$ en présence de l'hydrocarbure oléfinique 3C-5C,
dans lequel ledit second dispositif d'addition (3b) est installé à proximité du premier dispositif d'addition (3a), et dans lequel ledit appareil de dénitration et de réduction du $SO_3$ (4) est positionné en aval du premier dispositif d'addition (3a) et en aval du second dispositif d'addition (3b) et contient un catalyseur qui n'inclut pas de métal noble.

**2.** Système de traitement de gaz d'échappement selon la revendication 1, dans lequel le second dispositif d'addition (3b) est configuré pour ajouter un hydrocarbure oléfinique ayant une structure allylique au gaz d'échappement de combustion.

3. Système de traitement de gaz d'échappement selon la revendication 1 ou 2, dans lequel le second dispositif d'addition (3b) est configuré pour ajouter du $C_3H_6$ au gaz d'échappement de combustion.

4. Système de traitement de gaz d'échappement selon la revendication 3, dans lequel le second dispositif d'addition (3b) est configuré pour réguler la charge du $C_3H_6$ à 0,1 à 2,0 en rapport molaire de $C_3H_6/SO_3$.

5. Système de traitement de gaz d'échappement selon l'une quelconque des revendications 1 à 4, dans lequel le catalyseur inclut un oxyde, un oxyde mixte, ou un oxyde complexe choisi dans le groupe constitué du $TiO_2$, du $TiO_2$-$SiO_2$, du $TiO_2$-$ZrO_2$ et du $TiO_2$-$CeO_2$ en tant que support.

6. Système de traitement de gaz d'échappement selon la revendication 5, dans lequel le $SiO_2$ de l'oxyde complexe $TiO_2$-$SiO_2$ est contenu dans une plage de 5 % à 60 % en termes de rapport en pourcentage de $SiO_2$ ($TiO_2$ + $SiO_2$).

7. Système de traitement de gaz d'échappement selon l'une quelconque des revendications 1 à 6, comprenant en outre :

un préchauffeur d'air (5) qui est agencé côté courant arrière de l'appareil de dénitration et de réduction du $SO_3$ (4) et qui est configuré pour récupérer la chaleur provenant du gaz d'échappement de combustion ;
un précipitateur électrostatique (6) qui est agencé côté courant arrière du préchauffeur d'air (5) et qui est configuré pour collecter la poussière provenant du gaz d'échappement de combustion ; et
un appareil de désulfuration (8) qui est agencé côté courant arrière du précipitateur électrostatique (6) et qui est configuré pour absorber et éliminer le $SO_2$ restant dans le gaz d'échappement de combustion ou obtenu par réduction du $SO_3$ en amenant le $SO_2$ en contact avec une suspension aqueuse formée à partir de carbonate de calcium.

8. Système de traitement de gaz d'échappement selon la revendication 7,
dans lequel le gaz d'échappement de combustion est un gaz d'échappement provenant d'une centrale électrique alimentée en carburant de qualité inférieure, le système comprenant en outre :
un troisième dispositif d'addition (3c) qui est agencé côté courant avant du précipitateur électrostatique (6) et qui est configuré pour ajouter une quantité supplémentaire de $NH_3$ et/ou de $CaCO_3$ au gaz d'échappement de combustion incluant le $SO_3$ restant dans celui-ci comme troisième additif.

9. Procédé de traitement d'un gaz d'échappement consistant à éliminer les $NO_x$ et le $SO_3$ d'un gaz d'échappement de combustion incluant des $NO_x$ et du $SO_3$, le procédé comprenant :
une étape de dénitration et de réduction du $SO_3$ consistant à réaliser simultanément la dénitration des $NO_x$ et la réduction du $SO_3$ présents dans le gaz d'échappement de combustion en ajoutant du $NH_3$ qui est un premier additif et un second additif qui est un hydrocarbure oléfinique 3C-5C (hydrocarbure insaturé) au gaz d'échappement de combustion avant d'amener le gaz d'échappement de combustion en contact avec un catalyseur qui n'inclut pas de métal noble.

10. Procédé de traitement d'un gaz d'échappement selon la revendication 9, dans lequel le second additif est un hydrocarbure oléfinique ayant une structure allylique.

11. Procédé de traitement d'un gaz d'échappement selon la revendication 9 ou 10, dans lequel l'hydrocarbure oléfinique est du $C_3H_6$.

12. Procédé de traitement d'un gaz d'échappement selon la revendication 11, dans lequel une charge du $C_3H_6$ est de 0,1 à 2,0 en rapport molaire de $C_3H_6/SO_3$.

13. Procédé de traitement d'un gaz d'échappement selon l'une quelconque des revendications 9 à 12, dans lequel le catalyseur inclut un oxyde, un oxyde mixte, ou un oxyde complexe choisi dans le groupe constitué du $TiO_2$, du $TiO_2$-$SiO_2$, du $TiO_2$-$ZrO_2$ et du $TiO_2$-$CeO_2$ en tant que support.

14. Procédé de traitement d'un gaz d'échappement selon la revendication 13, dans lequel le $SiO_2$ de l'oxyde complexe $TiO_2$-$SiO_2$ est contenu dans une plage de 5 % à 60 % en termes de rapport en pourcentage de $SiO_2$ ($TiO_2$ + $SiO_2$).

**15.** Procédé de traitement d'un gaz d'échappement selon l'une quelconque des revendications 9 à 14, le procédé comprenant en outre :

une étape de préchauffage de l'air consistant à récupérer la chaleur provenant du gaz d'échappement de combustion qui a subi l'étape de dénitration et de réduction du $SO_3$ ;
une étape de précipitation consistant à collecter la poussière provenant du gaz d'échappement de combustion qui a subi l'étape de préchauffage de l'air ; et
une étape de dénitration consistant à absorber et à éliminer le $SO_2$ restant dans le gaz d'échappement de combustion qui a subi l'étape de précipitation ou qui a été obtenu par réduction du $SO_3$ en amenant le $SO_2$ en contact avec une suspension aqueuse formée à partir de carbonate de calcium.

**16.** Procédé de traitement d'un gaz d'échappement selon la revendication 15,
dans lequel le gaz d'échappement de combustion est un gaz d'échappement provenant d'une centrale électrique alimentée en carburant de qualité inférieure, le procédé comprenant en outre :
une troisième étape d'addition consistant à ajouter une quantité supplémentaire de $NH_3$ au gaz d'échappement de combustion avant de le soumettre à l'étape de précipitation incluant le $SO_3$ restant dans celui-ci, en tant que troisième additif.

EP 3 031 514 B1

# FIG.1

EP 3 031 514 B1

# FIG.2

# FIG.3

| TEST EXAMPLE 2 |
| --- |
| —△— NO$_X$ CONCENTRATION WHEN C$_3$H$_6$ WAS USED |
| —◆— SO$_3$ CONCENTRATION WHEN C$_3$H$_6$ WAS USED |
| TEST EXAMPLE 1 |
| —✕— NO$_X$ CONCENTRATION WHEN NO C$_3$H$_6$ WAS USED |
| —■— SO$_3$ CONCENTRATION WHEN NO C$_3$H$_6$ WAS USED |

C$_3$H$_6$/SO$_3$=2

# FIG.4

# FIG.5

TEST EXAMPLE 4
- △ NO$_X$ CONCENTRATION WHEN C$_3$H$_6$ WAS USED
- ◆ SO$_3$ CONCENTRATION WHEN C$_3$H$_6$ WAS USED

TEST EXAMPLE 3
- ✕ NO$_X$ CONCENTRATION WHEN NO C$_3$H$_6$ WAS USED
- ■ SO$_3$ CONCENTRATION WHEN NO C$_3$H$_6$ WAS USED

C$_3$H$_6$/SO$_3$=2

# FIG.6

# FIG.7

# FIG.8

TEST EXAMPLE 8
- △ NOₓ CONCENTRATION WHEN C₃H₆ WAS USED
- ◆ SO₃ CONCENTRATION WHEN C₃H₆ WAS USED

TEST EXAMPLE 7
- ✕ NOₓ CONCENTRATION WHEN NO C₃H₆ WAS USED
- ■ SO₃ CONCENTRATION WHEN NO C₃H₆ WAS USED

$C_3H_6/SO_3 = 0.9$

# FIG.9

| | TEST EXAMPLE 9 |
| --- | --- |
| —△— | $SiO_2/(TiO_2+SiO_2)=5\%$-$NO_X$ CONCENTRATION |
| —◆— | $SiO_2/(TiO_2+SiO_2)=5\%$-$SO_3$ CONCENTRATION |
| | TEST EXAMPLE 10 |
| —✕— | $SiO_2/(TiO_2+SiO_2)=14\%$-$NO_X$ CONCENTRATION |
| —■— | $SiO_2/(TiO_2+SiO_2)=14\%$-$SO_3$ CONCENTRATION |

$C_3H_6/SO_3=2$

## FIG.10

## FIG.11

## FIG.12(a)

# FIG.12(b)

FIG.13(a)

AH PRESSURE DROP INCREASE RATIO [-]

AH WAS WASHED WITH WATER

AH WAS WASHED WITH WATER

AH WAS WASHED WITH WATER

# FIG.13(b)

EP 3 031 514 B1

# FIG.14

Legend:
- □ SO₃ CONCENTRATION AT INLET=10ppm
- ■ SO₃ CONCENTRATION AT INLET=20ppm

Y-axis: SO₃ CONCENTRATION AT OUTLET [ppm]

X-axis: CONCENTRATION OF SUPPLIED C₃H₆ [ppm]

EP 3 031 514 B1

# FIG.15

# FIG.16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3495591 B
- JP 4813830 B
- EP 1452222 A1
- US 4221768 A
- US 2014018231 A1
- EP 0534087 A1
- US 2006083671 A1